# EUROPEAN PATENT APPLICATION

(11) **EP 2 535 321 A2**
(43) Date of publication of application: **19.12.2012**
(21) Application number: 12184354.4
(22) Date of filing: 27.03.2009
(51) Int. Cl.: C03C 3/247

(54) **Fluorophosphate glass, glass material for press molding, optical element blank, optical element and methods of manufacturing the same**

(30) Priority: 28.03.2008 JP 2008086041; 05.09.2008 JP 2008228270
(62) Divisional of application: 09250877.9
(71) Applicant: Hoya Corporation, Tokyo 161-8525 (JP)
(72) Inventor: Ikenishi, Mikio, Tokyo 161-8525 (JP)
(74) Representative: Matthews, Derek Peter

(57) **Abstract**

The present invention provides a fluorophosphate glass containing phosphorus, oxygen and fluorine as glass ingredients, in which, provided that a refractive index nd of the glass is nd⁽¹⁾ and a refractive index nd after re-melting the glass at 900°C for 1 hour in a nitrogen atmosphere, cooling the glass to a glass transition temperature and then cooling the glass down to 25°C at a temperature decrease rate of 30°C per hour is nd⁽²⁾, an absolute value of a difference between nd⁽¹⁾ and nd⁽²⁾ (nd⁽²⁾-nd⁽¹⁾) is equal to or less than 0.00300, and a molar ratio (O²⁻/P⁵⁺) of a content of O²⁻ to a content of P⁵⁺ is equal to or more than 3.5. The glass of the invention is reduced in volatility and erosiveness.

## Description

### FIELD OF THE INVENTION

The present invention relates to a fluorophosphate glass suitable as material of optical elements such as lenses and filters; an optical element blank, an optical element, each of which is composed of the fluorophosphates glass; and methods of manufacturing the same.

### BACKGROUND OF THE INVENTION

A fluorophosphate glass is a glass in high demand because of its properties such as low dispersibility, anomalous dispersibility, and high light transmittance over a wide visible range. The low dispersibility and the anomalous dispersibility are effective for correction of chromatic aberration and the high light transmittance is effective as an optical element material for guiding light having a short wavelength, such as near-ultraviolet light, as well as an optical element material for an imaging optical system. In addition, the fluorophosphate glass can provide a filter function to cut near-ultraviolet light by containing copper ions therein and is thus effective as a material for a color compensating filter of a semiconductor imaging device. Such a fluorophosphate glass is disclosed in JP-A-10-139454.

Although such a fluorophosphate glass is a useful optical material, since it shows high volatility in a high temperature state, striae tends to occur when a glass molded article is made from molten glass and therefore it is hard to stably produce high quality glass. In addition, since a volatile ingredient disappear from the molten glass with lapse of time, there also arises a problem that optical characteristics such as a refractive index are easily changed.

To overcome the above problems, JP-A-2007-76958 discloses a method of obtaining glass including sufficiently volatilizing volatile substance from molten glass to drive the substance out of the molten glass and then rapidly cooling the molten glass.

This method achieves its required object by putting a difference in refractive index between glasses before and after re-melting in a predetermined range.

Although the invention disclosed in JP-A-2007-76958 provides an excellent technique to overcome the problem inherent in the fluorophosphate glass, there is a need for further improvement from the following standpoints.

In melting of the fluorophosphate glass, a platinum crucible having high corrosion resistance is used to reduce mixture of a crucible material into glass. However, the platinum crucible is slightly eroded by the molten glass and platinum ions are melted and introduced into the glass. Although the temperature of glass is high and platinum ions are melted and introduced into a glass melt in a melting process or a clarification process, when the temperature of the glass melt is decreased to a range of temperature suitable for outflow, the platinum ions melted and introduced in the glass are precipitated as particles. Since the solubility of the platinum ions in the fluorophosphate glass is low, the platinum particles are apt to be precipitated. The platinum particles serve as a source of light scattering and cause deterioration of performance of optical elements.

Accordingly, in order to obtain high quality fluorophosphate glass it is desired not only reducing volatility but also reducing erosiveness of glass.

Since the method disclosed in JP-A-2007-76958 drives volatile substance out of the inside of glass, it takes a long time to produce glass. If the volatility can be reduced with a simpler method, productivity will be improved.

### SUMMARY OF THE INVENTION

In view of the above circumstances, it is an object of the present invention to provide a fluorophosphate glass with reduced volatility and erosiveness, and a press-molding glass material and an optical element, each of which is composed of the fluorophosphates glass.

To achieve the above object, the present invention provides the following items.
1. A fluorophosphate glass comprising phosphorus, oxygen and fluorine as glass ingredients, wherein, provided that a refractive index nd of the glass is nd⁽¹⁾ and a refractive index nd after re-melting the glass at 900°C for 1 hour in a nitrogen atmosphere, cooling the glass to a glass transition temperature and then cooling the glass down to 25°C at a temperature decrease rate of 30°C per hour is nd⁽²⁾, an absolute value of a difference between nd⁽¹⁾ and nd⁽²⁾ (nd⁽²⁾-nd⁽¹⁾) is equal to or less than 0.00300, and a molar ratio (O²⁻/P⁵⁺) of a content of O²⁻ to a content of P⁵⁺ is equal to or more than 3.5.
2. The fluorophosphate glass according to item 1, which has an Abbe number vd of more than 70.
3. The fluorophosphate glass according to item 1 or 2, which comprises, in terms of cationic%:
   P⁵⁺: 3 to 50%,
   Al³⁺: 5 to 40%,
   Mg²⁺: 0 to 10%,
   Ca²⁺: 0 to 30%,
   Sr²⁺: 0 to 30%,
   Ba²⁺: 0 to 40%,
   (wherein the total content of Mg²⁺, Ca²⁺, Sr²⁺ and Ba²⁺ is 10% or more,)
   Li⁺: 0 to 30%,
   Na⁺: 0 to 20%,
   K⁺: 0 to 20%,
   Y³⁺: 0 to 10%,
   La³⁺: 0 to 10%,
   Gd³⁺: 0 to 10%,
   Yb³⁺: 0 to 10%,
   B³⁺: 0 to 10%,
   Zn²⁺: 0 to 20%, and
   In³⁺: 0 to 20%; and,
   in terms of anionic%:
   F⁻: 20 to 95%, and
   O²⁻. 5 to 80%.
4. The fluorophosphate glass according to item 1 or 2, wherein the content of F⁻ is 65 anionic% or more.
5. The fluorophosphate glass according to item 4, which comprises, in terms of cationic%:
   P⁵⁺_{:} 3 to 15%,
   Al³⁺: 25 to 40%,
   Ca²⁺: 5 to 35%, and
   Sr²⁺: 5 to 25%.
6. The fluorophosphate glass according to item 5, which comprises, in terms of cationic%:
   Mg²⁺: 0 to 10%,
   Ba²⁺: 0 to 20%,
   Li⁺: 0 to 20%,
   Na⁺: 0 to 10%,
   K⁺: 0 to 10%, and
   Y³⁺: 0 to 5%.
7. The fluorophosphate glass according to any one of items 1 to 6, wherein a number density of foreign substances contained in the glass and having a particle diameter equal to or more than 10 µm is less than 5 pieces/cm³.
8. A glass material for press molding, comprising the fluorophosphate glass according to any one of items 1 to 7.
9. The glass material for press molding according to item 8, which is a precision press molding preform.
10. An optical element blank comprising the fluorophosphate glass according to any one of items 1 to 7.
11. An optical element comprising the fluorophosphate glass according to any one of items 1 to 7.
12. A method of manufacturing a fluorophosphate glass, the method comprising:
   preparing a blended raw material containing phosphorus, oxygen and fluorine;
   heating and melting the blended raw material in a crucible to obtain a molten glass; and
   molding the molten glass,
   wherein the blended raw material is prepared such that a molar ratio (O²⁻/P⁵⁺) of a content of O²⁻ to a content of P⁵⁺ becomes equal to or more than 3.5 in the fluorophosphate glass, and provided that a refractive index nd of the glass is nd⁽¹⁾ and a refractive index nd after re-melting the glass at 900°C for 1 hour in a nitrogen atmosphere, cooling the glass to a glass transition temperature and then cooling the glass down to 25°C at a temperature decrease rate of 30°C per hour is nd⁽²⁾, an absolute value of a difference between nd⁽¹⁾ and nd⁽²⁾ (nd⁽²⁾ -nd⁽¹⁾) becomes equal to or less than 0.00300.
13. The method of manufacturing a fluorophosphate glass according to item 12, wherein the crucible is formed of any one of platinum, a platinum alloy, gold and a gold alloy.
14. A method of manufacturing a glass material for press molding, the method comprising:
   preparing a blended raw material containing phosphorus, oxygen and fluorine;
   heating and melting the blended raw material in a crucible to obtain a molten glass; and
   molding the molten glass into a glass material for press molding comprising a fluorophosphate glass,
   wherein the blended raw material is prepared such that a molar ratio (O²⁻/P⁵⁺) of a content of O²⁻ to a content of P⁵⁺ becomes equal to or more than 3.5 in the fluorophosphate glass, and provided that a refractive index nd of the glass is nd⁽¹⁾ and a refractive index nd after re-melting the glass at 900°C for 1 hour in a nitrogen atmosphere, cooling the glass to a glass transition temperature and then cooling the glass down to 25°C at a temperature decrease rate of 30°C per hour is nd⁽²⁾, an absolute value of a difference between nd⁽¹⁾ and nd⁽²⁾ (nd⁽²⁾ -nd⁽¹⁾) becomes equal to or less than 0.00300.
15. A method of manufacturing a glass material for press molding, the method comprising:
   preparing a blended raw material containing phosphorus, oxygen and fluorine;
   heating and melting the blended raw material in a crucible to obtain a molten glass;
   molding the molten glass into a glass molded article comprising a fluorophosphates glass; and
   processing the glass molded article to obtain a glass material for press molding,
   wherein the blended raw material is prepared such that a molar ratio (O²⁻/P⁵⁺) of a content of O²⁻ to a content of P⁵⁺ becomes equal to or more than 3.5 in the fluorophosphate glass, and provided that a refractive index nd of the glass is nd⁽¹⁾ and a refractive index nd after re-melting the glass at 900°C for 1 hour in a nitrogen atmosphere, cooling the glass to a glass transition temperature and then cooling the glass down to 25°C at a temperature decrease rate of 30°C per hour is nd⁽²⁾, an absolute value of a difference between nd⁽¹⁾ and nd⁽²⁾ (nd⁽²⁾-nd⁽¹⁾) becomes equal to or less than 0.00300.
16. A method of manufacturing an optical element blank which is to be made into an optical element by grinding and polishing, the method comprising:
   heating and softening a glass material for press molding manufactured by the method according to item 14 or 15, followed by press molding the glass material.
17. A method of manufacturing an optical element blank, the method comprising:
   preparing a blended raw material containing phosphorus, oxygen and fluorine;
   heating and melting the blended raw material in a crucible to obtain a molten glass; and
   molding the molten glass into a glass material for press molding comprising a fluorophosphate glass,
   wherein the blended raw material is prepared such that a molar ratio (O²⁻/P⁵⁺) of a content of O²⁻ to a content of P⁵⁺ becomes equal to or more than 3.5 in the fluorophosphate glass, and provided that a refractive index nd of the glass is nd⁽¹⁾ and a refractive index nd after re-melting the glass at 900°C for 1 hour in a nitrogen atmosphere, cooling the glass to a glass transition temperature and then cooling the glass down to 25°C at a temperature decrease rate of 30°C per hour is nd⁽²⁾, an absolute value of a difference between nd⁽¹⁾ and nd⁽²⁾ (nd⁽²⁾-nd⁽¹⁾ becomes equal to or less than 0.00300.
18. A method of manufacturing an optical element, the method comprising:
   grinding and polishing the optical element blank according to item 10 or an optical element blank manufactured by the method according to item 16 or 17, thereby obtaining an optical element.
19. A method of manufacturing an optical element, the method comprising:
   heating the glass material for press molding according to item 9 or a glass material for press molding manufactured by the method according to item 14 or 15; and
   subjecting the glass material to a precision press molding using a press mold.
20. The method of manufacturing an optical element according to item 19, wherein the glass material is introduced into a press mold, and the glass material and the press mold are heated together and then subjected to a precision press molding.
21. The method of manufacturing an optical element according to item 19, wherein, after the glass material is heated, the glass material is introduced into a pre-heated press mold and is then subjected to a precision press molding.

According to the present invention, there can be provided a fluorophosphate glass which has good optical homogeneity and does not contain foreign substance; a glass material for press molding, an optical element blank, an optical element, each of which is composed of the fluorophosphates glass, and methods of manufacturing the same.

### BRIEF DESCRIPTION OF THE DRAWINGS

Fig. 1 is a graph showing a relation between the molar ratio (O²⁻/P⁵⁺) of a fluorophosphate glass and the absolute value Δnd of (nd⁽²⁾-nd⁽¹⁾) and a relation between the molar ratio (O²⁻/P⁵⁺) of the fluorophosphate glass and the number density of platinum foreign substances contained in the glass and having a particle diameter equal to or more than 10 µm.
Fig. 2 is a schematic view of a precision press molding apparatus used in Examples of the present invention.

### Description of Reference Numerals and Signs

1: Upper mold
2: Lower mold
3: Trunk mold
4: Preform
9: Support rod
10: Lower mold/trunk mold holder
11: Quartz tube
12: Heater
13: Pressing rod
14: Thermocouple

### DETAILED DESCRIPTION OF THE INVENTION

### Fluorophosphate glass

Hereinafter, fluorophosphate glass of the present invention will be described in detail.

Phosphate is being commonly used as a raw material of fluorophosphate glass. In addition, in order to make the incorporated amount of fluorine (F⁻) as an anion ingredient as much as possible, metaphosphate (oxygen atoms/phosphorus atoms = 3) having a low ratio of the number of oxygen (O²⁻) atoms to one phosphorus (P⁵⁺) atom (oxygen atoms/phosphorus atoms) is being used.

When the glass using metaphosphate is melt, it is believed that metaphosphoric acid and fluorine derived from the raw material react with each other to produce fluorophosphoyl (POF₃) having high volatility. On the other hand, it has proved that the amount of generation of the volatile ingredient can be significantly reduced when an atomic ratio of oxygen atoms to one phosphorus atom in the molten glass is adjusted or controlled to equal to or more than 3.5 (oxygen atoms/phosphorus atoms ≥ 3.5). It is believed that this is because, for a phosphoric acid present in the molten glass, biphosphoric acid whose ratio (oxygen atoms/phosphorus atoms) of the number of oxygen (O²⁻) atoms to one phosphorus (P⁵⁺) atom is 3.5 is more stable than metaphosphoric acid whose ratio (oxygen atoms/phosphorus atoms) of the number of oxygen (O²⁻) atoms to one phosphorus (P⁵⁺) atom is 3.

By setting a molar ratio (O²⁻/P⁵⁺) of the content of O²⁻ to the content of P⁵⁺ in the fluorophosphate glass to be equal to or more than 3.5, it is possible to suppress generation of the volatile ingredient. As a result, reactivity of the molten glass can be suppressed and erosiveness of the molten glass can also be significantly reduced.

The present invention provides a fluorophosphate glass of which the volatility and erosiveness are significantly suppressed by controlling the molar ratio (O²⁻/P⁵⁺) of the content of O²⁻ to the content of P⁵⁺ in the glass and approaching variation of a refractive index before and after re-melting of a solidified glass to 0.

In other words, according to the present invention, there is provided a fluorophosphate glass containing phosphorus, oxygen and fluorine as glass ingredients, in which, provided that a refractive index nd of the glass is nd⁽¹⁾ and a refractive index nd after re-melting the glass at 900°C for 1 hour in a nitrogen atmosphere, cooling the glass to a glass transition temperature and then cooling the glass down to 25°C at a temperature decrease rate of 30°C per hour is nd⁽²⁾, an absolute value of a difference between nd⁽¹⁾ and nd⁽²⁾ (nd⁽²⁾-nd⁽¹⁾) is equal to or less than 0.00300, and a molar ratio (O²⁻/P⁵⁺) of a content of O²⁻ to a content of P⁵⁺ is equal to or more than 3.5.

Although variation of the refractive index before and after re-melting is substantially 0 in the invention disclosed in JP-A-2007-76958, there is a room for improvement from a standpoint of suppression of reactivity and erosiveness of the molten glass. The present invention provides a fluorophosphate glass which is capable of suppressing generation of a volatile ingredient to suppress volatility as well as erosiveness of glass, thereby enabling the prevention of mixture of foreign substances by reducing erosion of a crucible and so on.

If the molar ratio (O²⁻/P⁵⁺) of the content of O²⁻ to the content of P⁵⁺ is less than 3.5, generation of the volatile ingredient cannot be suppressed, and reactivity and erosiveness of glass accompanied with the generation of volatile ingredient cannot be also suppressed. Accordingly, in the present invention, the molar ratio (O²⁻/P⁵⁺) of the content of O²⁻ to the content of P⁵⁺ is equal to or more than 3.5.

When the content of F⁻ is less than 65 anionic%, since a percentage of oxygen ingredient in anion ingredients can be increased, it is preferable to increase the molar ratio (O²⁻/P⁵⁺) in view of further suppressing the volatility and erosiveness. Specifically, when the content of F⁻ is less than 65 anionic%, the molar ratio (O²⁻/P⁵⁺) is preferably equal to or more than 3.53, more preferably equal to or more than 3.55, furthermore preferably equal to or more than 3.6.

In the fluorophosphate glass of the present invention, an absolute value of a difference (nd⁽²⁾-nd⁽¹⁾) between nd⁽¹⁾ and nd⁽²⁾ is set to be equal to or less than 0.00300 while the molar ratio (O²⁻/P⁵⁺) is in the above range. If the absolute value of (nd⁽²⁾-nd⁽¹⁾) is more than 0.00300, volatility, reactivity and erosiveness of the glass are increased. The absolute value of (nd⁽²⁾-nd⁽¹⁾) is preferably equal to or less than 0.00250, more preferably equal to or less than 0.00200, furthermore preferably equal to or less than 0.00150, even more preferably equal to or less than 0.00120, still even more preferably equal to or less than 0.00100.

Since fluorine in the fluorophosphate glass is an ingredient to relatively lower the refractive index of the glass, a value of (nd⁽²⁾-nd⁽¹⁾) is generally a positive value.

In order to prevent the influence on the refractive index of glass by factors other than volatility by reaction of the glass with the atmosphere, nitrogen is used for the atmosphere for re-melting conduced to measure nd⁽²⁾. The re-melting is conducted for the glass under predetermined conditions at 900°C for 1 hour, and then the glass is cooled to a glass transition temperature. Since a value of nd⁽²⁾ is affected by a temperature decrease rate in cooling, the cooling is conducted at a temperature decrease rate of 30°C per hour and the glass is cooled to 25°C.

Any methods known in the art may be used for measurement of the refractive index, and the refractive index is preferably measured with precision of significant 6-digit sequence of numbers (5-digit sequence below a decimal point). For example, the refractive index may be measured using a 'measurement method of a refractive index of optical glass' according to Japanese Optical Glass Industry Organization Standard JOG IOS 01-1994.

Depending on shape, volume or the like of glass, for example if the glass has a small spherical geometry or is formed of a thick lens, the glass cannot be made into a sample having a shape and dimension defined by the above standard in some cases. In such a case, the glass is heated, softened, press-molded, and annealed to produce a prism shape where two planes intersect with each other at a predetermined angle. Then, the refractive index is measured based on the measurement principle defined by the above standard. Since heating temperature in manufacturing a preform by press-molding is in a temperature range in which the glass can be barely softened, and is extremely lower than the temperature at which the glass is melted, an influence on volatile substance concentration is negligible and variation of the refractive index before and after heating is also negligible, thereby causing no trouble.

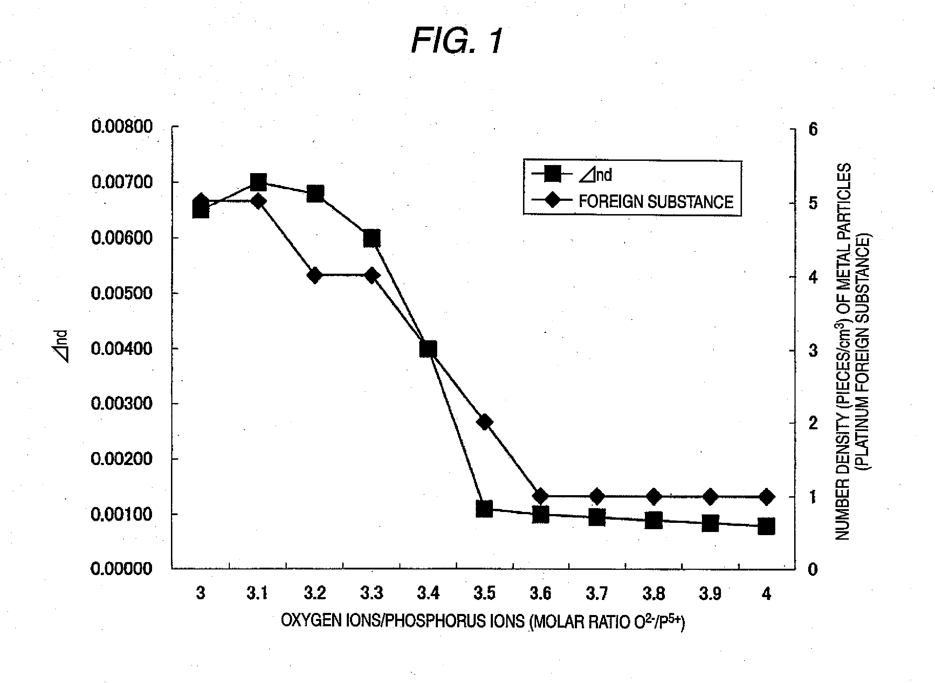

Fig. 1 shows changes of an absolute value Δnd of refractive index variation (nd⁽²⁾-nd⁽¹⁾) and the number density of platinum foreign substance contained in the fluorophosphate glass and having a diameter of 10 µm or above when the molar ratio (O²⁻/P⁵⁺) is changed between 3.0 and 4.0. Glass melting is conducted in a platinum crucible.

It can be seen from Fig. 1 that, when the molar ratio (O²⁻/P⁵⁺) is equal to or more than 3.5, the volatility of the fluorophosphate glass is suppressed and accordingly Δnd becomes equal to or less than 0.00300, as well as the erosiveness of the fluorophosphate glass is suppressed and accordingly the number density of the platinum foreign substance can be suppressed.

In this manner, according to the present invention, since the fluorophosphate glass with sufficiently suppressed volatility, reactivity and erosiveness is obtained, it is possible to prevent erosion of a crucible, pipes, a stirring rod and so on used for manufacture of glass, thereby preventing mixture of foreign substances into the glass by erosion. For example, when the crucible, the pipes guiding the molten glass, and the stirring rod homogenizing the molten glass are made of platinum or platinum alloy, according to the present invention, it is possible to obtain optically-homogeneous fluorophosphate glass having reduced and suppressed erosion of platinum or platinum alloy and containing no platinum foreign substance.

According to the fluorophosphate glass of the present invention, low-dispersed glass having an Abbe number vd of more than 70 can be obtained.

### (Fluorophosphate glass I)

Next, preferred embodiments of the fluorophosphate glass of the present invention will be described. A first embodiment of the fluorophosphate glass of the present invention (referred to as fluorophosphate glass I) is a fluorophosphate glass contains: in terms of cationic%,
P⁵⁺: 3 to 50%,
Al³⁺: 5 to 40%,
Mg²⁺: 0 to 10%,
Ca²⁺: 0 to 30%,
Sr²⁺: 0 to 30%,
Ba²⁺: 0 to 40%,
(wherein the total content of Mg²⁺, Ca²⁺, Sr²⁺ and Ba²⁺ is equal to or more than 10%,)
Li⁺: 0 to 30%,
Na⁺: 0 to 20%,
K⁺: 0 to 20%,
Y³⁺_{:} 0 to 10%,
La³⁺: 0 to 10%,
Gd³⁺: 0 to 10%,
Yb³⁺: 0 to 10%,
B³⁺: 0 to 10%,
Zn²⁺: 0 to 20%, and
In³⁺: 0 to 20%; and,
in terms of anionic%,
F⁻: 20 to 95%, and
O²⁻: 5 to 80%.

In the following description on fluorophosphate glass I, the contents of cation ingredients and the total contents thereof are represented by cationic% and the contents of anion ingredients and the total contents thereof are represented by anionic%.

Incidentally, "containing 0% of a certain ingredient X" means that the content of the ingredient X is 0%, and namely, it means that the ingredient X is not contained.

P⁵⁺ is an important ingredient acting as a network former in the glass and the glass becomes extremely instable when the content of this ingredient in the glass is less than 3%. If the content thereof is more than 50%, the amount of introduction of fluorine is required to be suppressed to set the molar ratio (O²⁻/P⁵⁺) to be equal to or more than 3.5, which may result in difficulty in obtaining required low dispersibility. Accordingly, the content of P⁵⁺ is preferably in a range of 3 to 50%, more preferably in a range of 3 to 45%, furthermore preferably in a range of 5 to 40%.

Al³⁺ is an important ingredient to raise stability of the fluorophosphate glass and the glass becomes instable when the content of this ingredient in the glass is less than 5%. If the content thereof is more than 40%, the glass becomes inversely instable since the total content of other ingredients become too small. Accordingly, the content of Al³⁺ is preferably in a range of 5 to 40%, more preferably in a range of 5 to 3 8%, furthermore preferably in a range of 10 to 35%.

Mg2⁺, Ca²⁺, Sr²⁺ and Ba²⁺, all of which are alkaline earth metal, are ingredients to raise stability of the glass to thereby raise refractive index of the glass, and when the total content thereof in the glass is equal to or more than 10%, the effect of stabilizing the glass can be raised. However, if the content of a particular alkaline earth metal ingredient become too large, since a balance with other ingredients is collapsed, these ingredients are preferably evenly contained in the glass. For example, it is preferable to incorporate two or more of Mg²⁺, Ca²⁺, Sr²⁺ and Ba²⁺ in the glass. More specifically, the content of Mg²⁺ is preferably in a range of 0 to 10%, more preferably in a range of 1 to 10%. The content of Ca²⁺ is preferably in a range of 0 to 30%, more preferably in a range of 1 to 30%. The content of Sr²⁺ is preferably in a range of 0 to 30%, more preferably in a range of 1 to 20%. The content of Ba²⁺ is preferably in a range of 0 to 40%, more preferably in a range of 2 to 40%.

Li⁺, Na⁺ and K⁺, all of which are alkaline metal, are ingredients to lower viscosity and glass transition temperature of the glass and facilitate manufacture of the glass, but excessive introduction thereof lowers the stability of the glass. Therefore, the content of Li⁺ is preferably in a range of 0 to 30%, the content of Na⁺ is preferably in a range of 0 to 20%, and the content of K⁺ is preferably in a range of 0 to 20%. Since Li⁺ of the alkaline metal is highly effective in raising the stability of the glass, Li⁺ is introduced with the content preferably equal to or more than 0.5%, more preferably equal to or more than 1%, particularly preferably equal to or more than 2%. Accordingly, the content of Li⁺ is preferably in a range of 0 to 30%, more preferably in a range of 0.5 to 30%, furthermore preferably in a range of 1 to 30%, even more preferably in a range of 2 to 30%.

The content of Na⁺ is preferably in a range of 0 to 20%, more preferably in a range of 0 to 10%, furthermore preferably in a range of 1 to 5%, and the content of K⁺ is preferably in a range of 0 to 20%, more preferably in a range of 0 to 10%, furthermore preferably in a range of 0 to 5%.

Y³⁺, La³⁺, Gd³⁺ and Yb³⁺, all of which are rare-earth elements, are ingredients to secure low dispersibility of the glass and raise its refractive index, but excessive introduction thereof increases the melting temperature of the glass, thereby lowering the stability of the glass. Therefore, the content of each of the above ingredients is preferably in a range of 0 to 10%, more preferably in a range of 0 to 5%, furthermore preferably in a range of 1 to 5%.

B³⁺ is an ingredient to enhance durability of the glass, but may deteriorate productivity since it tends to be volatilized as a fluoride during melting. On that account, the content of this ingredient is preferably in a range of 0 to 10%, more preferably in a range of 0 to 5%, furthermore preferably in a range of 0 to 1%, even more preferably zero.

Zn²⁺ and In³⁺ are ingredients which can be easily introduced into the glass, like alkaline earth metal, and it is expected that the glass becomes stable by introducing Zn²⁺ and In³⁺ into the glass so that the glass has multi ingredients, but excessive introduction thereof is not preferable. On this account, the content of each of Zn²⁺ and In³⁺ is preferably in a range of 0 to 20%, more preferably in a range of 0 to 10%, furthermore preferably in a range of 0 to 5%, even more preferably in a range of 0 to 1 %, particularly preferably zero.

In addition, the glass has a property of high light transmittance over a wide visible range of short wavelength to long wavelength, in addition to the low dispersibility and anomalous dispersibility. Although the glass is suitable as a material for obtaining various optical elements such as lenses and prisms with utilizing such a property, it is preferable that the glass does not contain ions having absorption in the visible region in such a use, for example, ions of metal elements such as Fe, Cu, Ni, Co, Cr, Mn, V, Nd, Ho and Er.

Next, anion ingredients and anion additives will be described. Main anion ingredients of the fluorophosphate glass are F⁻ and O²⁻. In order to realize required optical characteristic and excellent glass stability, it is preferable that the content of F⁻ is 20 to 95% and the content of O²⁻ is 5 to 80%.

When a small quantity of Cl⁻, Br⁻ and I⁻ are introduced in the glass, since platinum articles such as a platinum container, a platinum nozzle and the like used in manufacture or outflow of the glass is hard to be wet with glass melt, it is possible to facilitate manufacture of the glass. On the other hand, since excessive introduction of Cl⁻, Br⁻ and I⁻ causes variation of a refractive index due to ingredient volatilization and generation of platinum foreign substances, it is preferable that the content of Cl⁻ is 0 to 3 anionic%, the content of Br⁻ is 0 to 1 anionic% and the content of I⁻ is 0 to 1 anionic%, and it is more preferable that the content of Cl⁻ is 0 to 1 anionic%, the content of Br⁻ is 0 to 0.5 anionic% and the content of I⁻ is 0 to 0.5 anionic%. In addition, the total content of Cl⁻, Br⁻ and I⁻ is preferably 0 to 5%. In addition, from the above standpoint, the upper limit of the total content of Cl⁻, Br⁻ and I⁻ is more preferably 4%, furthermore preferably 3%. In addition, the lower limit of the total content above is more preferably 0.01 %, furthermore preferably 0.05%, even more preferably 0.1 %. It can be said that each of ranges defined by any combinations of the upper limit and the lower limit of the total content of Cl⁻, Br⁻ and I⁻ is a preferred range of the preferred total content of Cl⁻, Br⁻ and I⁻. For example, the total content of Cl⁻, Br⁻ and I⁻ may be in a range of 0 to 3% or a range of 0.1 to 3%.

In order to achieve the object of the present invention, the total content of F⁻, O²⁻, Cl⁻, Br⁻ and I⁻ is preferably equal to or more than 98 anionic%, more preferably equal to or more than 99 anionic%, furthermore preferably 100 anionic%.

In order to alleviate load to the environments, it is preferable that the fluorophosphate glass I of the present invention does not contain Pb, As, Cd, Th and the like.

Although optical characteristics of the fluorophosphate glass I of the present invention are not particularly limited, Abbe number vd is preferably more than 70 and equal to or less than 98, more preferably more than 70 and equal to or less than 95. In addition, the refractive index nd is preferably 1.43 to 1.6, more preferably 1.45 to 1.6.

### (Fluorophosphate glass II)

A second embodiment of the fluorophosphate glass of the present invention (referred to as fluorophosphate glass II) is a fluorophosphate glass in which the content of F⁻ is equal to or more than 65 anionic%.

In the fluorophosphate glass II, in order to realize ultra low dispersibility, the content of ^{F-} is made equal to or more than 65 anionic%. If the content of F⁻ is less than 65 anionic%, it is difficult to obtain desired low dispersibility and anomalous dispersibility. When the content of F⁻ is equal to or more than 65 anionic%, sufficient anomalous dispersibility can be provided. The content of F⁻ is preferably 65 to 95 anionic%, more preferably 70 to 92 anionic%.

Among fluorophosphate glasses, a glass having the high content of F⁻, such as fluorophosphate glass II, has very low viscosity in a glass melt state and is particularly conspicuous in generation of striae due to volatilization and variation of refractive index. According to the fluorophosphate glass II, by controlling the molar ratio (O²/P⁵⁺) to be equal to or more than 3.5, since generation of volatile substances is suppressed, the volatilization is significantly lowered, and the reactivity and erosiveness of the glass are suppressed, a high quality optical glass can be produced in a stable manner.

The upper limit of the molar ratio (O²⁻/P⁵⁺) is not particularly limited so long as the glass can be stably manufactured, but may be 4.0 which may be considered as a standard.

A preferred glass of fluorophosphate glasses II contains: in terms of cationic%,
P⁵⁺: 3 to 15%,
Al³⁺: 25 to 40%,
Ca²⁺: 5 to 35%, and
Sr²⁺: 5 to 25%.

The above-mentioned glass may contain: in terms of cationic%,
Mg²⁺: 0 to 10%,
Ba²⁺: 0 to 20%,
Li⁺: 0 to 20%,
Na⁺: 0 to 10%,
K⁺: 0 to 10%, and
Y³⁺: 0 to 5%.

In the following description on fluorophosphate glass II, the contents of cation ingredients and the total contents thereof are represented by cationic% and the contents of anion ingredients and the total contents thereof are represented by anionic%.

Incidentally, "containing 0% of a certain ingredient X" means that the content of the ingredient X is 0%, and namely, it means that the ingredient X is not contained.

In the glass, P⁵⁺ acts as a network former. If the content of P⁵⁺ is less than 3%, stability of the glass is deteriorated. If the content of P⁵⁺ is more than 15%, the content of O²⁻ has to be increased to ensure that the molar ratio (O²⁻/P⁵⁺) is equal to or more than 3.5. As a result, the content of F⁻ is decreased, which results in difficulty in obtaining sufficient low dispersibility and anomalous dispersibility. Accordingly, the content of P⁵⁺ is preferably 3 to 15%. The content of P⁵⁺ is more preferably 3.5 to 13%, furthermore preferably 4 to 11%.

Al³⁺ is an ingredient to raise stability of the glass. If the content of Al³⁺ is less than 25%, stability is deteriorated, and if the content of Al³⁺ is more than 40%, stability is deteriorated as well. Accordingly, the content of Al³⁺ is preferably 25 to 40%. The content of Al³⁺ is more preferably 28 to 36%, furthermore preferably 30 to 36%.

Ca²⁺ is an ingredient to raise stability of the glass, which is preferably increased as the content of F⁻ is increased. If the content of Ca²⁺ is less than 5%, it is difficult to obtain the above effect sufficiently, and if the content of Ca²⁺ is more than 35%, stability is deteriorated. Accordingly, the content of Ca²⁺ is preferably 5 to 35%. The content of Ca²⁺ is more preferably 10 to 35%, furthermore preferably 20 to 30%.

Sr²⁺ has an effect to raise stability of the glass. If the content of Sr²⁺ is less than 5%, the above effect is insufficient, and if the content of Sr²⁺ is more than 25%, stability is deteriorated. Accordingly, the content of Sr²⁺ is preferably 5 to 25%. The content of Sr²⁺ is more preferably 10 to 25%, furthermore preferably 15 to 20%.

In this manner, when Ca²⁺ coexists with Sr²⁺, the stability of the glass can be further improved.

Mg²⁺ acts to raise stability of the glass when it is introduced up to 10%. Accordingly, the content of Mg²⁺ is preferably 0 to 10%, more preferably 1 to 10%, furthermore preferably 3 to 8%.

Ba²⁺ acts to raise stability of the glass when it is introduced up to 20%. Accordingly, the content of Ba²⁺ is preferably 0 to 20%. Ba²⁺ is not an essential ingredient in a glass having the high content of F⁻ while it strongly acts to raise stability in a glass having the low content of F⁻. The content of Ba²⁺ is more preferably 1 to 15%, furthermore preferably 2 to 10%.

To further improve the stability of the glass, it is preferable that Ca²⁺, Sr²⁺ and Mg²⁺ coexist in the glass, Ca²⁺, Sr²⁺ and Ba²⁺ coexist in the glass, or Ca²⁺, Sr²⁺, Mg²⁺ and Ba²⁺ coexist in the glass.

Li⁺ is an ingredient that reduces the viscosity of glass melt, but it has a strong action to decrease liquid phase temperature, and generally has an effect to prevent striae when flowing out and molding molten glass. This effect makes a significant contribution to enhancement of quality of the fluorophosphate glass according to a synergy with an effect of suppression of generation of a volatile ingredient produced when the molar ratio (O²⁻/P⁵⁺) is in a required range. However, if the content of Li⁺ is more than 20%, viscosity of the glass melt is excessively lowered, which may result in devitrification and generation of striae due to promotion of crystallization. Accordingly, the content of Li⁺ is preferably 0 to 20%. The content of Li⁺ is more preferably 0 to 15%, furthermore preferably 1 to 10%, even more preferably 1 to 7%.

Na⁺ acts to lower glass transition temperature, but excessive introduction thereof deteriorates stability and durability of the glass. Accordingly, the content of Na⁺ is preferably 0 to 10%. The content of Na⁺ is more preferably 0 to 7%, furthermore preferably 1 to 5%.

K⁺ also acts to lower glass transition temperature, but excessive introduction thereof deteriorates stability and durability of the glass. Accordingly, the content of K⁺ is preferably 0 to 10%. The content of K⁺ is more preferably 0 to 5%, furthermore preferably 0 to 3%.

When two or more of alkaline metal ingredients Li⁺, Na⁺ and K⁺ coexist in the glass, the stability of the glass can be improved.

Y³⁺ is expected to improve stability of the glass when a small quantity thereof is introduced in the glass, but if the content thereof is more than 5%, glass melt temperature is raised, volatilization from the molten glass is promoted, and stability of the glass is also deteriorated. Accordingly, the content of Y³⁺ is preferably 0 to 5%. The content of Y³⁺ is more preferably 1 to 5%, furthermore preferably 1 to 3%.

In addition to this, for the purpose of adjustment of a refractive index, a small quantity of La³⁺, Gd³⁺, Zr⁴⁺, Zn²⁺ may be introduced.

In addition, in order to obtain a fluorophosphate glass with excellent formability of molten glass and high quality, the total content of P⁵⁺, Al³⁺, Li⁺, Mg²⁺, Ca²⁺, Sr²⁺, Ba²⁺, Na²⁺, K⁺ and Y³⁺ is preferably equal to or more than 95%, more preferably equal to or more than 97%, furthermore preferably equal to or more than 98%, even more preferably equal to or more than 99%.

In addition, when a small quantity of Cl⁻, Br⁻ and I⁻ are introduced in the glass, since platinum articles such as a platinum container, a platinum nozzle and the like used in manufacture or outflow of the glass is hard to be wet with fluorophosphate glass, it is possible to facilitate manufacture of the glass. Since excessive introduction of Cl⁻, Brand I⁻ causes variation of a refractive index due to ingredient volatilization and generation of platinum foreign substances, it is preferable that the total content of Cl⁻, Br⁻ and I⁻ is preferably 0 to 5%. In addition, from the above standpoint, the upper limit of the total content of Cl⁻, Br⁻ and I⁻ is more preferably 4%, furthermore preferably 3%. In addition, the lower limit of the total content thereof is more preferably 0.01 %, furthermore preferably 0.05%, even more preferably 0.1%. It can be said that each of ranges defined by any combinations of the upper limit and the lower limit of the total content of Cl⁻, Br⁻ and I⁻ is a preferred range of the preferred total content of Cl⁻, Br⁻ and I⁻. For example, the total content of Cl⁻, Br⁻ and I⁻ may be in a range of 0 to 3% or a range of 0.1 to 3%.

The glass transition temperature of the fluorophosphate glass II is preferably less than 500°C, more preferably equal to or less than 480°C, furthermore preferably equal to or less than 460°C, even more preferably equal to or less than 440°C. In this manner, since the glass transition temperature is low, this glass is suitable for precision press molding and has excellent moldability when the glass is re-heated, softened and molded. Since the glass transition temperature is low as described above, heating temperature for molding can be restricted to be relatively low. On that account, since a chemical reaction of the glass with a mold such as a press mold or the like is hard to occur, a glass molded article having a clean and smooth surface can be molded. In addition, deterioration of the mold can be suppressed.

In the fluorophosphate glass II, Abbe number (v_{d}) is preferably equal to or more than 88, more preferably 88 to 98, furthermore preferably 90 to 97.

The refractive index nd is preferably 1.42 to 1.47, more preferably 1.43 to 1.46.

Since the fluorophosphate glass II has ultralow dispersibility as well as high glass stability with liquid phase temperature equal to or less than 700°C, a high quality fluorophosphate glass can be provided as an optical element material suitable for correction of color aberration.

In addition, in order to alleviate load to the environments, it is preferable that both of the fluorophosphate glasses I and II do not contain Pb, As, Cd, Th, Tl, Te, Cr, Se, and U.

The fluorophosphate glass of the present invention does not require ingredients such as Lu, Sc, Hf and Ge. Because Lu, Sc, Hf and Ge are expensive, it is preferable not to introduce these ingredients.

The fluorophosphate glass of the present invention shows an excellent light transmittance over a wide visible range of wavelength. In order to activate the excellent light transmittance, except for a case where light is absorbed in a particular wavelength range, it is preferable not to introduce elements causing coloration, such as Cu, Cr, V, Fe, Ni, Co and Nd.

### (Near-infrared absorptive glass)

Since the fluorophosphate glass of the present invention shows a near-infrared absorption characteristic when Cu²⁺ is added to the glass, Cu²⁺ is added to the glass if the glass intends to be used as a near-infrared absorptive glass. The content of Cu²⁺ is preferably 0.5 to 13 cationic% based on the total content of the glass ingredients excluding Cu²⁺. A Cu²⁺-containing glass is suitable as a material of a color compensating filter of a semiconductor imaging device such as CCD or CMOS. The content of Cu²⁺ may be suitably determined within the above range in consideration of thickness of the filter. For the Cu²⁺-containing glass, except for adjustment of an absorption characteristic, it is preferable not to add ions having an absorption in the visible range, except Cu²⁺. As the fluorophosphate glass of the present invention, the Cu²⁺-containing glass containing Cu²⁺ of 0.5 to 13 cationic% based on the total content of the glass ingredients excluding Cu²⁺ (referred to as glass III) is preferably a fluorophosphate glass containing: in terms of cationic%,
P⁵⁺: 5 to 40%,
Al³⁺: 0 to 20%,
Li⁺, Na⁺ and K⁺: 0 to 30% in total,
Mg²⁺, Ca²⁺, Sr²⁺, Ba²⁺ and Zn²⁺: 5 to 40% in total, and
Cu²⁺: 0.5 to 13%; and,
in terms of anionic%,
F⁻: 20 to 70%, and
O²⁻: 30 to 80%.

Incidentally, "containing 0% of a certain ingredient X" means that the content of the ingredient X is 0%, and namely, it means that the ingredient X is not contained.

In the above composition, P⁵⁺ is a basic ingredient of the fluorophosphate glass and an important ingredient causing absorption of an infrared range of Cu²⁺. If the content of P⁵⁺ is less than 5%, color of the glass is deteriorated to be greenish. Conversely, if the content of P⁵⁺ is more than 40%, weatherability and devitrification resistance of the glass are deteriorated. Accordingly, the content of P⁵⁺ is preferably 5 to 40%, more preferably 10 to 40%, furthermore preferably 15 to 35%.

Al³⁺ is an ingredient to improve devitrification resistance, heat resistance, thermal impact resistance, mechanical strength and chemical durability of the fluorophosphate glass. However, if the content of Al³⁺ is more than 20%, a near-infrared absorption characteristic is deteriorated. Accordingly, the content of Al³⁺ is preferably 0 to 20%, more preferably 1 to 20%, furthermore preferably 5 to 20%, even more preferably 5 to 15%.

Li⁺, Na⁺ and K⁺ are ingredient to improve meltability and devitrification resistance of the glass and transmittance of a visible range. However, if the total content of Li⁺, Na⁺ and K⁺ is more than 30%, durability and workability of the glass are deteriorated. Accordingly, the total content of Li⁺, Na⁺ and K⁺ is preferably 0 to 30%, more preferably 0 to 28%, furthermore preferably 0 to 25%.

Among these alkaline ingredients, Li⁺ is excellent in the above action, and the content of Li⁺ is preferably 1 to 30%, more preferably 10 to 30%.

Mg²⁺, Ca²⁺, Sr²⁺, Ba²⁺ and Zn²⁺ are ingredient useful to improve devitrification resistance, durability and workability of the glass. However, excessive introduction of these ingredients in the glass deteriorates the devitrification resistance. Accordingly, the total content of Mg²⁺, Ca²⁺, Sr²⁺, Ba²⁺ and Zn²⁺ is preferably 5 to 40%, more preferably 10 to 40%.

The content of Mg²⁺ is preferably 0 to 20%, more preferably 1 to 15%.

The content of Ca²⁺ is preferably 0 to 20%, more preferably 1 to 20%.

The content of Sr²⁺ is preferably 0 to 25%, more preferably 5 to 25%.

The content of Ba²⁺ is preferably 0 to 20%, more preferably 1 to 20%, furthermore preferably 5 to 20%.

Cu²⁺ is responsible for a near-infrared absorption characteristic. If the content of Cu²⁺ is less than 0.5%, near-infrared absorption is low. Conversely, if the content of Cu²⁺ is more than 13%, devitrification resistance of the glass is deteriorated. Accordingly, the content of Cu²⁺ is preferably 0.5 to 13%, more preferably 0.5 to 10%, futhermore preferably 1 to 5%, even more preferably 1 to 3%.

F- is an important anion ingredient to lower a melting point of the glass and improve weatherability of the glass. When F⁻ is contained in the glass, it is possible to lower melting temperature of the glass, suppress reduction of Cu²⁺, and obtain a required optical characteristic. If the content of F⁻ is less than 10%, weatherability is deteriorated. Conversely, if the content of F⁻ is more than 70%, coloration occurs near a wavelength of 400 nm by univalent Cu⁺ since the content of O²⁻ is decreased. Accordingly, the content of F⁻ is preferably 10 to 70%. In order to further improve the above characteristics, the content of F⁻ is preferably 10 to 60%, more preferably 15 to 50%.

O²⁻ is an important anion ingredient. The entire remaining content except Fof the entire anion ingredients is preferably O²⁻. Accordingly, the preferred content of O²⁻ corresponds to a subtraction of the preferred content of F⁻ from 100%. If the content of O²⁻ is too small, since bivalent Cu²⁺ is reduced to univalent Cu⁺, absorption near a short wavelength range, particularly 400 nm, becomes large to be greenish. Conversely, if the content of O²⁻ is excessive, since viscosity and melting temperature of the glass are raised, transmittance of the glass is deteriorated. In addition, it is preferable that noxious Pb and As are not used.

A preferred transmittance characteristic of the Cu-containing near-infrared absorptive glass is as follows.

When a spectroscopic transmittance of a wavelength of 500 to 700 nm is converted to a thickness corresponding to a wavelength of 615 nm indicating a transmittance of 50%, a spectroscopic transmittance of a wavelength of 400 to 1200 nm shows the following characteristics.

A transmittance at a wavelength of 400 nm is equal to or more than 78%, preferably equal to or more than 80%, more preferably equal to or more than 83%, furthermore preferably equal to or more than 85%; a transmittance at a wavelength of 500 nm is equal to or more than 85%, preferably equal to or more than 88%, more preferably equal to or more than 89%; a transmittance at a wavelength of 600 nm is equal to or more than 51%, preferably equal to or more than 55%, more preferably equal to or more than 56%; a transmittance at a wavelength of 700 nm is equal to or less than 12%, preferably equal to or less than 11%, more preferably equal to or less than 10%; a transmittance at a wavelength of 800 nm is equal to or less than 5%, preferably equal to or less than 3%, more preferably equal to or less than 2.5%, furthermore preferably equal to or less than 2.2%, even more preferably equal to or less than 2%; a transmittance at a wavelength of 900 nm is equal to or less than 5%, preferably equal to or less than 3%, more preferably equal to or less than 2.5%, furthermore preferably equal to or less than 2.2%, even more preferably equal to or less than 2%; a transmittance at a wavelength of 1000 nm is equal to or less than 7%, preferably equal to or less than 6%, more preferably equal to or less than 5.5%, furthermore preferably equal to or less than 5%, even more preferably equal to or less than 4.8%; a transmittance at a wavelength of 1100 nm is equal to or less than 12%, preferably equal to or less than 11%, more preferably equal to or less than 10.5%, furthermore preferably equal to or less than 10%; and a transmittance at a wavelength of 1200 nm is equal to or less than 23%, preferably equal to or less than 22%, more preferably equal to or less than 21%, furthermore preferably equal to or less than 20%.

That is, absorption of a near-infrared ray at a wavelength of 700 to 1200 nm is made large while absorption of a visible ray at a wavelength of 400 to 600 nm is made small. Here, a transmittance refers to a value which is, assuming that when a glass sample having two planes which are in parallel to each other and are optically polished is prepared and light is vertically incident on one of the planes, obtained by dividing intensity of light emitted from the other of the planes by intensity of the incident light before incidence into the sample, which is also referred to an external transmittance.

According to such a characteristic, good color compensation of a semiconductor imaging device such as CCD, CMOS or the like can be achieved.

### (Erosiveness of glass)

In order to melt an optically homogeneous glass, a container storing a glass or a pipe guiding a glass in a process of homogenizing and flowing out a molten glass should be made of a heat resistant material which is hard to be eluted into the glass, for example, metal or alloy such as platinum or a platinum alloy, or gold or a gold alloy.

While these metal materials have the above-mentioned properties, they are apt to be precipitated as metal particles in the glass with decrease of temperature of the molten glass, as described above. In particular, this problem is remarkable to a fluorophosphate glass because of difficulty in dissolution of metal ions.

According to the fluorophosphate glass of the present invention, since it hardly erode a heat resistant metal material, it is possible to significantly suppress the amount of the metal melted and incorporated into the glass to thereby obtain a fluorophosphate glass with extremely less foreign substance contained therein.

In the fluorophosphate glass thus obtained, number density of foreign substances, such as platinum particles or particles including platinum, which are contained in the glass and have a particle diameter equal to or more than 10 µm is less than 5/cm³. These particles are foreign substances to scatter a light ray, for example, a visible light, thereby deteriorating performance of an optical element. According to the present invention, since foreign substances as a source of light scattering are significantly reduced or are not present, a high quality optical glass can be provided. The number density of foreign substances contained in the glass and having the particle diameter equal to or more than 10 µm is preferably less than 5/cm³, more preferably less than 3/cm³, furthermore preferably equal to or less than 2.5/cm³, even more preferably equal to or less than 2/cm³.

The fluorophosphate glass of the present invention is an optical glass having anomalous dispersibility and is suitable as a material of a high dimensional optical element for color compensation.

### (Method of manufacturing fluorophosphate glass)

Next, a method of manufacturing the fluorophosphate glass of the present invention will be described.

In compounding, melting, clarifying and homogenizing glass raw materials to obtain an optical glass, a glass in which a molar ratio (O²⁻/P⁵⁺) of the total content of O²to the total content of P⁵⁺ in the glass raw materials is equal to or more than 3.5 is used. The molar ratio (O²⁻/P⁵⁺) is preferably equal to or more than 3.51, more preferably equal to or more than 3.55, furthermore preferably equal to or more than 3.6.

Here, the glass raw materials are intended to include raw materials made by compounding and mixing various kinds of compounds, which are so-called batch raw materials, cullet, etc.

In order to obtain desired optical characteristics, the glass raw materials are compounded such that the molar ratio (O²⁻/P⁵⁺) of the content of O²⁻ to the content of P⁵⁺ becomes equal to or more than 3.5 when the whole content of oxygen and phosphorus contained in the glass raw materials is converted to the content of P⁵⁺ and O²⁻, and the compounded glass raw materials are melted. In this manner, it is possible to control the molar ratio (O²⁻/P⁵⁺) of the content of O²⁻ to the content of P⁵⁺ in the glass to be equal to or more than 3.5.

To ensure such a control, the glass raw materials are compounded such that the molar ratio (O²⁻/P⁵⁺) of the content of O²⁻ to the content of P⁵⁺ becomes preferably equal to or more than 3.5, more preferably equal to or more than 3.51, furthermore preferably equal to or more than 3.55, even more preferably equal to or more than 3.6, when the whole content of oxygen and phosphorus contained in the glass raw materials is converted to the content of P⁵⁺ and O²⁻.

According to the present invention, since volatility of the molten glass is suppressed, the molar ratio (O²⁻/P⁵⁺) of the content of O²⁻ to the content of P⁵⁺ in the glass becomes equal to the molar ratio (O²⁻/P⁵⁺) of the total content of O²⁻ to the total content of P⁵⁺ in the glass raw materials.

Here, the total content of O²⁻ in the glass raw materials refers to the amount of oxygen to be introduced in the glass and does not include the amount of oxygen flown out of the glass melt in the form of CO_{X} gas, NO_{X} gas, oxygen gas, vapor and the like. For example, in the case that carbonate, nitrate, hydroxide and the like are used as the glass raw materials, the carbonate, nitrate and hydroxide are decomposed by heating of the glass raw materials to generate the above gases and the gases are flown out of the glass melt. Accordingly, the oxygen contained in the gases makes no contribution to a vitrification reaction. In addition, if bound water exists in the glass raw materials, since the bound water secedes from the glass raw materials by heating of the glass raw materials and is flown out of the glass melt as vapor, oxygen contained in the vapor also makes no contribution to the vitrification reaction. Accordingly, the oxygen gas flown out of the glass melt is excluded from the above content of oxygen. When the carbonate, nitrate and hydroxide are used, oxides composed of cations and oxygen which become glass ingredients contained in these compounds are considered, and the amount of oxygen contained in the above compounds as the oxides may be considered as the amount of oxygen to be introduced in the glass.

If only a metaphosphoric acid material and a fluoride material are used for compounding the glass raw materials, a molar ratio (O²⁻/P⁵⁺) of the content of O²⁻ to the content of P⁵⁺ when the whole content of oxygen and phosphorus contained in the glass raw materials is converted to the content of P⁵⁺ and O²⁻ becomes 3 and does not reach 3.5 due to lack of oxygen. Accordingly, in order to introduce oxygen in the glass independent of phosphorus, it is demanded to use oxide, nitrate and the like in combination. In addition, some or all of metaphosphate typically used as a phosphoric acid material may be changed to pyrophosphate. When the pyrophosphate is used, it is demanded to use oxide, nitrate and the like in combination as well.

In addition, according to the present invention, since volatility of the molten glass is suppressed to an extremely low level, it is possible to provide an optical glass whose tolerance of refractive index nd is within ±0.00050, preferably ±0.00020, and a method of manufacturing the optical glass. Accordingly, a tolerance of refractive index nd of an optical glass constituting each of articles of a precision press molding preform, an optical element blank and optical element, which will be described below, may be adjusted within the above range.

### Glass material for press molding

Next, a glass material for press molding according to the present invention will be described.

The glass material for press molding according to the present invention is composed of the fluorophosphate glass of the present invention.

The above-mentioned glass material means a lump of glass used for press molding. Examples of the glass material may include a lump of glass corresponding to mass of a press molded article, such as a precision press molding preform, a press molding glass gob of an optical element blank, or the like.

Hereinafter, the above examples will be described.

A precision press molding preform (preform to be used for precision press molding, which may be hereinafter sometimes abbreviated as a preform) means a glass preform to be heated for being used for precision press molding. Here, the precision press molding, which is also called mold optics molding as well known in the art, refers to a method of forming an optical functional surface of an optical element by transferring a molding surface of a press mold. An optical functional surface means a surface to refract, reflect, diffract, or input/output light to be controlled in an optical element, and a lens surface in a lens or the like corresponds to the optical functional surface.

In order to desirably extend glass along a molding surface while preventing the glass from reacting and being fused with a press mold molding surface in the precision press molding, it is preferable that a carbon-containing film is coated on a surface of a preform. It is preferable that the carbon-containing film contains carbon as a main ingredient (it is preferable that, when the content of elements in the film is represented by atm%, the content of carbon is larger than the contents of other elements). Specifically, examples of the carbon-containing film include a carbon film and a hydrocarbon film. As a method of forming the carbon-containing film, there may be used one of known methods such as vacuum deposition, sputtering and ion plating, which use a carbon raw material; thermal decomposition, which use a material gas such as hydrocarbon; and the like.

A preform is prepared as follows.

A first example of preparation is a method including separating a predetermined weight of lump of molten glass from a molten glass, cooling it, and molding a preform having the same mass as the lump of molten glass. For example, a homogeneous molten glass is prepared by melting, clarifying and homogenizing a glass raw material, and is flown out of an outflow nozzle or outflow pipe made of platinum or platinum alloy with controlled temperature. In case where a small-sized preform or a spherical preform is molded, the molten glass is dropped as molten glass droplets having desired mass from the outflow nozzle and then the molten glass droplets are received by a preform mold and are molded as a preform. Alternatively, similarly, a preform is molded by dropping molten glass droplets having desired mass into liquid nitrogen or the like by means of the outflow nozzle. In case where medium or large-sized preform is prepared, a stream of molten glass is run down from the outflow pipe, a leading edge of the stream of molten glass is received by a preform mold, a constriction portion is formed between a nozzle of the stream of molten glass and a preform mold, the preform mold is suddenly dropped right downward, the stream of molten glass is separated from the constriction portion by means of a surface tension of the molten glass, and a lump of molten glass having desired mass is received by a receiving member and is molded as a preform.

In order to fabricate a preform having a smooth plane without scars, spots, wrinkles, surface deteriorations and the like, for example, a free surface, there is used a method of molding a preform while applying a wind pressure to a lump of molten glass above a preform mold or the like to rise the lump of molten glass, or a method of molding a preform by cooling a gas material under normal temperature and normal pressure of liquid nitrogen or the like and putting molten glass droplets into a liquid medium.

In the case where the preform is molded while rising the lump of molten glass, a gas (referred to as rising gas) is blown on the lump of molten glass and an upward wind pressure is applied to the lump of molten glass. At this time, if viscosity of the lump of molten glass is too low, the rising gas enters the glass and remains as bubbles in the preform. However, when the viscosity of the lump of molten glass is set to 3 to 60dPa·s, the rising gas can rise the lump of molten glass without entering the glass.

Examples of the gas used when the rising gas is blown on the preform include air, N₂ gas, O₂ gas, Ar gas, He gas, and vapor. In addition, the wind pressure is not particularly limited so long as the preform can rise without contacting a solid such as a mold surface.

Since a precision press molded article (for example, an optical element) fabricated by the preform has a rotational symmetrical axis like a lens in many cases, it is preferable that the preform also has a shape having a rotational symmetrical axis. As a specified example, the preform may one spherical or rotational symmetrical axis. Examples of the shape having one rotational symmetrical axis may include one having a smooth contour without an angle or indent in a section including the rotational symmetrical axis, one having a contour of an ellipse whose short axis is coincident with the rotational symmetrical axis in the section, a shape having a flat sphere (a shape where one axis passing through the center of the sphere is defined and dimension is reduced in the axis direction), etc. The preform having such a shape can be prepared by molding the lump of molten glass in a rising state (a preform having one rotational symmetrical axis and having a smooth contour without an angle or indent in the section including the rotational symmetrical axis) or molding molten glass droplets while rising and rotating the molten glass droplets (molding of a spherical preform).

In addition, a preform having a shape having one rotational symmetrical axis and an indent in one or both of two opposing planes centered at an intersection point of the rotational symmetrical axis and a surface is also preferable. In this case, the center of the indent, that is, the center of the bottom of the indent, becomes an intersection point of the rotational symmetrical axis and the indent. A preform having an indent in only one side of one of the opposing planes is preferable as a preform used when a convex meniscus lens or a concave meniscus lens is prepared by a precision press molding, and a preform having an indent in both sides of the opposing planes is preferable as a preform used when both concave lenses are prepared by a precision press molding. In the precision press molding, an upper mold and a lower mold are provided, a preform is introduced into a press mold with a convex molding surface of the upper mold and/or the lower mold, an indent of the preform is pressed with a vertex of the convex molding surface of the upper mold and/or the lower mold, the preform is arranged at a central position within the press mold, and the preform may be arranged without misalignment when the press mold is moved. Such a preform can be prepared by press-molding a lump of molten glass in the lower mold for preform molding. In this case, the lump of molten glass is supplied to the lower mold for preform molding, and the lump of molten glass remains floated until the glass reaches viscosity suitable for the press molding. When the glass reaches viscosity suitable for the press molding, the lump of molten glass on the lower mold for preform molding is pressed into the upper mold for preform molding from top, and a shape of the molding surface of the lower mold and upper mold for preform molding is transferred into the lump of molten glass. At the molding surface of the lower mold for preform molding is provided a plurality of gas exhaust nozzles to exhaust a gas to apply a wind pressure to the lump of molten glass and rise the lump of molten glass. In the press molding, a gas exhaust pressure is adjusted such that the glass does not enter the gas exhaust nozzles. By doing so, it is possible to prevent the gas from entering the glass and prevent bubbles from being mixed into the preform. After the press molding, the upper mold for preform molding is separated from the glass and pressurization to the glass is ended.

Thereafter, while exhausting the gas from the gas exhaust nozzles to apply a wind pressure to the glass and rise the glass, the glass is cooled and then is drawn out of the lower mold for preform molding, thereby obtaining the preform. By doing so, even when wrinkles occur on a glass surface by the press molding, the glass surface is heated from the inside of the glass of high temperature by floating of the glass after the press molding, and accordingly, the preform with no wrinkle and with a smooth surface can be obtained. In addition, when an indent is to be formed in one of the opposing planes, the glass may be press-molded with one of the molding surfaces of the upper mold and lower mold for preform molding as a convex surface. In this case, in order to stably conduct the rising and press molding of the glass, it is preferable that the molding surface of the lower mold for preform molding becomes a concave surface and the molding surface of the upper mold for preform molding becomes a convex surface. In addition, in case where an indent is formed in both of the opposing planes, it is preferable that both of the molding surfaces of the lower mold and upper mold for preform molding become a convex surface. As described above, while there has conventionally been the problem that, when a lump of molten glass of high temperature, which is composed of conventional fluorophosphate glass, remains floated or is press-molded by press mold, volatile substance is adhered to a mold, thereby clogging gas exhaust nozzles, or extraneous matter is adhered to the glass, thereby contaminating a glass surface or deteriorating precision of press molding in press molding, according to the present invention, since the volatility of the glass is suppressed, such a conventional problem can be overcome.

A second example of preparation is to prepare a preform made of glass of predetermined mass by casting a homogeneous molten glass in a mold, eliminating distortion of the molded article by annealing, cutting or severing the molded articles to divide it into shapes having predetermined dimension, preparing a plurality of pieces of glass, smoothening surfaces of the pieces of glass by polishing the pieces of glass. It is preferable that a carbon-containing film is coated on a surface of the preform thus prepared.

### Optical element blank

Hereinafter, an optical element blank of the present invention will be described.

The optical element blank of the present invention is composed of the above-described fluorophosphate glass.

A glass gob for press molding of the optical element blank is a lump of glass used when the optical element blank to be finished as an optical element by grinding and polishing is press-molded. The optical element blank has a shape which is an addition of a workpiece, which will be removed by grinding and polishing, to a shape of a desired optical element.

As an example of preparation of the glass gob, a homogeneous molten glass is cast in a mold, distortion of the molded article is eliminated by annealing, the molded articles is cut or severed to be divided into shapes having predetermined dimension, a plurality of pieces of glass is prepared, edges of the pieces of glass are rounded by barrel-polishing, and mass of the glass gob is adjusted to be equal to mass of the optical element blank. A barrel-polished gob surface is a rough surface on which a powder release agent is apt to be applied uniformly in press molding.

As a second example of preparation of the glass gob, a leading end of a stream of flown molten glass is received in a gob mold, a constriction portion is formed in the course of the stream of molten glass, the gob mold is suddenly dropped right downward, and the molten glass is separated from the constriction portion by a surface tension. In this manner, a lump of molten glass having desired mass is obtained on the gob mold and the lump of molten glass is molded into the lump of glass while exhausting a gas to the glass to apply an upward wind pressure to the glass and rise the glass. The lump of glass thus obtained is annealed and barrel-polished to achieve a glass gob having desired mass.

### Optical element

An optical element of the present invention is composed of the fluorophosphate glass of the present invention. Therefore, according to the present invention, an optical element which utilizes low dispersibility can be provided. Examples of the optical element include an aspherical lens, a spherical lens, a micro lens, a lens array, a prism, a diffraction grid, a lens-attached prism and a diffraction grid-attached lens, without being limited to the kind, shape and so on thereof. Examples of the aspherical and spherical lenses include a convex meniscus lens, a concave meniscus lens, a double-convex lens, a double-concave lens, a plano-convex lens and a plano-concave lens.

In terms of application, examples of the optical element include an optical element constituting an imaging optical system, an optical element constituting a projecting optical system, an element for optical communication and a lens such as an optical pickup lens or a collimator lens for reading/ writing data from/into an optical recording type information recording medium such as DVD and CD.

Examples of the optical element constituting the imaging optical system include a lens or a prism equipped within various cameras such as a digital still camera, a digital video camera, a camera using a transitional film, a monitoring camera and an in-vehicle camera, a camera lens of a camera-attached mobile telephone, and a front lens of a telephoto lens.

Examples of the optical element constituting the projecting optical system include a lens and a prism constituting an optical system of a liquid crystal projector or a rear projector. Since the optical element of the present invention is made of glass having anomalous dispersibility, it is suitable for high-dimensional color compensation.

In addition, the optical element made of Cu-containing fluorophosphate glass has a near-infrared absorption function and is suitable as an optical element of a color compensating filter or the like of a semiconductor imaging device such as CCD and CMOS.

On a surface of the optical element, an optical thin film to limit light reflectivity, such as an anti-reflecting film, may be formed according to the necessity.

### Method of manufacturing optical element blank

Next, methods of manufacturing the optical element blank of the present invention will be described.

A first method of manufacturing the optical element blank of the present invention is a method of manufacturing an optical element blank which is to be made into an optical element by grinding and polishing, the method including heating and softening a glass material for press molding of the present invention, followed by press molding the glass material. As described above, a powder release agent such as boron nitride is uniformly applied on a surface of the glass material, the glass material is placed on an adiabatic dish, the adiabatic dish is put in a heating softening furnace, the glass material is heated until the glass material is softened, and the softened glass material is introduced in a press mold and is subjected to a press molding. Next, a press molded article is drawn out of the press mold and is annealed to eliminate distortion, and then its optical characteristics such as a refractive index are adjusted such that the optical characteristics have desired values.

A second method of manufacturing the optical element blank is a method of manufacturing an optical element blank which is to be made into an optical element by grinding and polishing, the method including melting and flowing out a glass raw material to obtain a lump of molten glass so that the fluorophosphate glass of the present invention can be obtained, followed by subjecting the lump of molten glass to a press molding. First, a homogenized molten glass is flown onto a molding surface of a lower mold on which a powder release agent such as boron nitride is uniformly applied, and a stream of molten glass whose lower end is supported by the lower mold is cut using a cutting knife which is called shear. Thus, a lump of molten glass having desired mass is obtained on the molding surface of the lower mold. Next, the lower mold on which the lump of molten glass is placed is carried right below an upper mold standing at a separate position, and the lump of molten glass is pressed with the upper and lower molds to be molded into an optical element blank shape. Next, a press molded article is drawn out of the molds and is annealed to eliminate distortion, and then its optical characteristics such as a refractive index are adjusted such that the optical characteristics have desired values.

Both of the above-mentioned two methods may be performed in air. In addition, for the molding conditions, the material of press mold, the heating softening furnace, and the dish on which the glass gob is placed in heating and softening, any known conditions and articles may be used.

### Method of manufacturing optical element

Next, methods of manufacturing the optical element of the present invention will be described.

A first method of manufacturing the optical element of the present invention includes grinding and polishing the optical element blank manufactured in the above-mentioned method of the present invention. The grinding and polishing may be carried out in accordance with any of known methods.

A second method of manufacturing the optical element of the present invention includes heating the glass material of the present invention and subjecting the glass material to a precision press molding using a press mold. Here, the glass material mentioned herein means a preform.

It is preferable that a heating process of the press mold and the preform and pressing process is performed in a non-oxidizing gas atmosphere such as nitrogen gas or a mixture of nitrogen gas and hydrogen gas, in order to prevent oxidation of a molding surface of the press mold or a releasing film provided in the molding surface. In the non-oxidizing gas atmosphere, a carbon-containing film coating a surface of the preform is not oxidized and remains on a surface of a precision press molded article. Although the carbon-containing film has to be finally removed, in order to remove the carbon-containing film relatively easily and completely, the precision press molded article may be heated in an oxidizing atmosphere, for example, in air. The oxidation and removal of the carbon-containing film should be conducted at a temperature at which the precision press molded article is not deformed by heating. Specifically, the oxidation and removal of the carbon-containing film are preferably conducted within a range of temperature less than a glass transition temperature.

While the precision press molding uses the press mold whose molding surface is processed into a desired shape with high precision in advance, a releasing film may be formed on the molding surface in order to prevent fusion of glass in pressing. Examples of the releasing film include a carbon-containing film, a nitride film and a noble metal film, and a hydrogenated carbon film, a carbon film, etc. are preferable as the carbon-containing film. In the precision press molding, when the preform is supplied between a pair of opposing upper and lower molds whose molding surfaces are shaped with high precision, both of the molds and the preform are heated up to a temperature corresponding to viscosity of the glass of 10⁵ to 10⁹ dPa·s to soften the preform, and the preform is then press molded, the molding surface of the mold is transferred onto the glass with high precision.

In addition, when the preform pre-heated up to a temperature corresponding to viscosity of the glass of 10⁴ to 10⁸ dPa·s is supplied between a pair of opposing upper and lower molds whose molding surfaces are shaped with high precision and the preform is then press molded, the molding surface of the mold can be transferred onto the glass with high precision.

Pressure and time for pressing may be properly determined in consideration of viscosity of the glass and so on. For example, a press pressure may be about 5 to 15 MPa and a press time may be 10 to 300 seconds. The press conditions such as the press time and the press pressure may be properly set within a known range depending on shape and dimension of the molded article.

Thereafter, the mold and the precision press molded article are cooled and are released, preferably when it comes to a temperature equal to or less than a distortion point, and then the precision press molded article is drawn out. In addition, in order to set an optical characteristic to a desired value with high precision, an annealing condition of the molded article in cooling, for example, an annealing speed or the like, may be properly adjusted.

The method of manufacturing the second optical element may be generally divided into the following two methods. A first method is a method of manufacturing an optical element, wherein the glass material is introduced into the press mold, and the glass material and the press mold are heated and precision press-molded together. This method is encouraged when stress is laid on improvement of molding precision such as surface precision and eccentricity precision. A second method is a method of manufacturing an optical element, wherein the glass material is heated and introduced into a pre-heated press mold, and then is precision press-molded. This method is encouraged when stress is laid on improvement of productivity.

In addition, the optical element may be prepared without passing the press molding process. For example, a homogeneous molten glass is cast in a mold to mold a glass block, distortion of the glass block is eliminated by annealing, and adjustment on optical characteristics is made by adjusting an annealing condition so that a refractive index of the glass is set to a desired value. Next, the glass block is cut or severed to produce pieces of glass, and the pieces of glass are subsequently grinded and polished, thereby completing an optical element.

### Examples

Hereinafter, the present invention will be described in more detail by way of examples, but the present invention is not limited to these examples.

### Example 1 (example of manufacture of fluorophosphate glass)

In order to prepare glasses having compositions shown in Tables 1-1 to 1-6, raw materials such as phosphate e.g., diphosphate, and fluoride, corresponding to respective glass ingredients were weighted and sufficiently mixed. Tables 1-1 to 1-6 show a ratio (O²⁻/P⁵⁺) of the total content of O²⁻ to the total content of P⁵⁺ and a ratio (F/(F⁻ + O²⁻)) of the content of F⁻ to the total content of F⁻and O²⁻ in the mixed raw materials. The mixed raw materials were put in a platinum crucible, stirred, heated and melted for one to three hours in an electric furnace at 900°C, clarified and homogenized to obtain a molten glass. The obtained molten glass was cast in a mold to obtain glass blocks composed of various fluorophosphate glasses (fluorophosphate glasses 1 to 59). Incidentally, in the melting, clarification and homogenization of the glass, no atmosphere exchange was conducted.

While it was confirmed that there is no striae in fluorophosphate glasses 1 to 59, it was confirmed that there is a significant striae in comparative optical glasses 1 and 2.

In preparation of fluorophosphate glasses 1 to 59, optical glasses having a desired characteristic with significantly reduced volatility were obtained by controlling the ratio (O²⁻/P⁵⁺) of the total content of O²⁻ to the total content of P⁵⁺ to be equal to or more than 3.5 and balancing the contents of other ingredients in order to suppress the volatility, as shown in Tables 1-1 to 1-6. In addition, while non-vitrified raw materials such as phosphate (e.g., diphosphate) and fluoride were used in the above example of manufacture, cullet may be used, or the non-vitrified raw materials and the cullet may be used in combination. Incidentally, the amount of oxygen contained in the glass raw materials, particularly, non-vitrified raw materials, is the amount of oxygen introduced into the glass. When the carbonate, nitrate and hydroxide are used, oxides composed of cations and oxygen which become glass ingredients contained in these compounds are considered, and the amount of oxygen contained in the above compounds as the oxides may be considered as the amount of oxygen to be introduced in the glass.

The thus-molded fluorophosphate glasses 1 to 59 and the comparative optical glasses 1 and 2 were cooled at a slow temperature decrease rate of -30°C/hour to obtain samples composed of various glasses, and then refractive indexes nd of the samples were measured. The measured refractive indexes nd are shown as nd⁽¹⁾ in Tables 1-1 to 1-6. Next, the samples were again melted at 900°C for one hour in a nitrogen atmosphere, cooled to a glass transition temperature, and thereafter cooled to 25°C at a slow temperature decrease rate of-30°C/hour, and their refractive indexes nd were measured. The measured refractive indexes nd are shown as nd⁽²⁾ in Tables 1-1 to 1-6. Tables 1-1 to 1-6 show a difference (nd⁽²⁾- nd⁽¹⁾) between nd⁽¹⁾ and nd⁽²⁾ and its absolute value.

### (1) Abbe number (vd)

Abbe number was measured for the glasses obtained by cooling at a slow temperature decrease rate of -30°C/hour.

### (2) Glass transition temperature (Tg)

Glass transition temperature was measured with a temperature increase rate of 4°C/min by means of a thermomechanical analyzer (Thermo Plus TMA 8310) available from RIGAKU Corporation.

### (3) Number of metal foreign substances in glass

The inside of the glass was observed with 100 magnifications by means of an optical microscope, the number of foreign substances having a particle diameter equal to or more than 10 µm was counted, and the number of foreign substances per volume was calculated from the number of foreign substances and a volume of an observation area.

**Table 1-1**

| | 1 | 2 | 3 | 4 | 5 | 6 | 7 | 8 | 9 | 10 |
|---|---|---|---|---|---|---|---|---|---|---|
| Cation ingredients (cationic%) | | | | | | | | | | |
| P⁵⁺ | 19 | 20.3 | 20 | 19.7 | 32.6 | 29 | 31.9 | 30 | 11.67 | 11.17 |
| Al³⁺ | 22.7 | 22.3 | 22.4 | 22.5 | 11.6 | 9 | 11.7 | 12 | 31.59 | 32.08 |
| Mg²⁺ | 6.8 | 6.7 | 6.7 | 6.8 | 6.3 | 6 | 6.4 | 6.6 | 4.07 | 4.07 |
| Ca²⁺ | 8.5 | 8.4 | 8.4 | 8.5 | 6.3 | 4 | 6.4 | 6.6 | 23.26 | 25.00 |
| Sr²⁺ | 14.5 | 14.3 | 14.3 | 14.4 | 5.3 | 5 | 5.3 | 5.5 | 15.09 | 16.09 |
| Ba²⁺ | 10.1 | 10 | 10 | 10 | 16.9 | 25 | 17 | 17.5 | 8.52 | 5.79 |
| Mg²⁺+Ca²⁺+Sr²⁺+Ba²⁺ | 39.9 | 39.4 | 39.4 | 39.7 | 34.8 | 40 | 35.1 | 36.2 | 50.94 | 50.95 |
| Lⁱ⁺ | 17.3 | 17 | 17.1 | 17.1 | 20 | 21 | 20.2 | 20.8 | 3.12 | 3.12 |
| Na⁺ | 0 | 0 | 0 | 0 | 0 | 0 | 0 | 0 | 0.00 | 0.00 |
| K⁺ | 0 | 0 | 0 | 0 | 0 | 0 | 0 | 0 | 0.00 | 0.00 |
| Y³⁺ | 1.1 | 1 | 1.1 | 1 | 1 | 1 | 1.1 | 1 | 2.68 | 2.68 |
| La³⁺ | 0 | 0 | 0 | 0 | 0 | 0 | 0 | 0 | 0 | 0 |
| Gd³⁺ | 0 | 0 | 0 | 0 | 0 | 0 | 0 | 0 | 0 | 0 |
| Yb³⁺ | 0 | 0 | 0 | 0 | 0 | 0 | 0 | 0 | 0 | 0 |
| Y³⁺+La³⁺+Gd³⁺+Yb³⁺ | 1.1 | 1 | 1.1 | 1 | 1 | 1 | 1.1 | 1 | 2.68 | 2.68 |
| B³⁺ | 0 | 0 | 0 | 0 | 0 | 0 | 0 | 0 | 0 | 0 |
| Zn²⁺ | 0 | 0 | 0 | 0 | 0 | 0 | 0 | 0 | 0 | 0 |
| In³⁺ | 0 | 0 | 0 | 0 | 0 | 0 | 0 | 0 | 0 | 0 |
| Total of Cation ingredients | 100 | 100 | 100 | 100 | 100 | 100 | 100 | 100 | 100 | 100 |

| Anion ingredients (anionic%) | | | | | | | | | | |
|---|---|---|---|---|---|---|---|---|---|---|
| F⁻ | 62.9 | 62 | 61.8 | 61.7 | 35.1 | 41.3 | 34.6 | 39.4 | 81.60 | 82.00 |
| O²⁻ | 37.1 | 38 | 38.2 | 38.3 | 64.9 | 58.7 | 65.4 | 60.6 | 18.20 | 17.80 |
| Cl⁻ | 0 | 0 | 0 | 0 | 0 | 0 | 0 | 0 | 0.20 | 0.20 |
| Total of anion ingredients | 100 | 100 | 100 | 100 | 100 | 100 | 100 | 100 | 100 | 100 |
| F⁻/(F⁻+O²⁻) | 0.629 | 0.62 | 0.618 | 0.617 | 0.351 | 0.413 | 0.346 | 0.394 | 0.817635 | 0.821643 |
| Molar ratio O²⁻/P⁵⁺ | 3.74 | 3.61 | 3.67 | 3.72 | 3.5 | 3.51 | 3.56 | 3.54 | 3.50 | 3.59 |
| Refractive index nd | 1.49817 | 1.49504 | 1.49649 | 1.49671 | 1.55021 | 1.54837 | 1.5533 | 1.55439 | 1.45886 | 1.45599 |
| nd ⁽¹⁾ | 1.49817 | 1.49504 | 1.49649 | 1.49671 | 1.55021 | 1.54837 | 1.5533 | 1.55439 | 1.45886 | 1.45599 |
| nd ⁽²⁾ | 1.49867 | 1.49565 | 1.49704 | 1.49719 | 1.55131 | 1.54942 | 1.5542 | 1.55534 | 1.45996 | 1.45699 |
| nd ⁽²⁾ - nd ⁽¹⁾ | 0.0005 | 0.00061 | 0.00055 | 0.00048 | 0.0011 | 0.00105 | 0.0009 | 0.00095 | 0.0011 | 0.001 |
| \|nd ⁽²⁾ - nd ⁽¹⁾\| | 0.0005 | 0.00061 | 0.00055 | 0.00048 | 0.0011 | 0.00105 | 0.0009 | 0.00095 | 0.0011 | 0.001 |
| Abbe number vd | 81.3 | 81.7 | 81.4 | 81.7 | 71.8 | 71.2 | 71.7 | 72.49 | 90 | 90.5 |
| Glass transition temperature (°C) | 405 | 406 | 410 | 400 | 390 | 385 | 392 | 395 | | |
| Liquidus temperature (°C) | 590 | 600 | 600 | 600 | 590 | 600 | 300 | 600 | 620 | 610 |
| Number of metal foreign substances (pieces/cm³) | 1 or less | 1 or less | 1 or less | 1 or less | 3 | 2 | 1 or less | 1 | 2 | 1 |

**Table 1-2**

| | 11 | 12 | 13 | 14 | 15 | 16 | 17 | 18 | 19 | 20 |
|---|---|---|---|---|---|---|---|---|---|---|
| Cation ingredients (cationic%) | | | | | | | | | | |
| P⁵⁺ | 11.17 | 11.17 | 11.44 | 11.17 | 11.17 | 11.17 | 6.80 | 6.17 | 6.00 | 5.67 |
| Al³⁺ | 32.09 | 32.09 | 31.82 | 32.09 | 34.09 | 32.09 | 35.80 | 36.09 | 35.80 | 34.59 |
| Mg²⁺ | 4.07 | 4.07 | 4.20 | 4.07 | 4.07 | 4.07 | 4.30 | 3.07 | 4.30 | 4.07 |
| Ca²⁺ | 23.26 | 23.26 | 23.13 | 23.26 | 23.26 | 23.26 | 23.70 | 25.38 | 24.50 | 23.26 |
| Sr²⁺ | 15.09 | 15.09 | 15.09 | 15.09 | 15.09 | 15.09 | 18.40 | 15.09 | 18.40 | 15.09 |
| Ba²⁺ | 8.52 | 8.52 | 8.52 | 8.52 | 8.52 | 8.52 | 6.00 | 8.52 | 6.00 | 8.52 |
| Mg²⁺+Ca²⁺+Sr²⁺+Ba²⁺ | 50.94 | 50.94 | 50.94 | 50.94 | 50.94 | 50.94 | 52.4 | 52.06 | 53.2 | 50.94 |
| Lⁱ⁺ | 3.12 | 3.12 | 3.12 | 3.12 | 3.12 | 3.12 | 2.30 | 2.00 | 2.30 | 6.12 |
| Na⁺ | 0.00 | 0.00 | 0.00 | 0.00 | 0.00 | 0.00 | 0.00 | 0.00 | 0.00 | 0.00 |
| K⁺ | 0.00 | 0.00 | 0.00 | 0.00 | 0.00 | 0.00 | 0.00 | 0.00 | 0.00 | 0.00 |
| Y³⁺ | 2.68 | 2.68 | 2.68 | 2.68 | 0.68 | 2.68 | 2.70 | 3.68 | 2.70 | 2.68 |
| La³⁺ | 0 | 0 | 0 | 0 | 0 | 0 | 0 | 0 | 0 | 0 |
| Gd³⁺ | 0 | 0 | 0 | 0 | 0 | 0 | 0 | 0 | 0 | 0 |
| Yb³⁺ | 0 | 0 | 0 | 0 | 0 | 0 | 0 | 0 | 0 | 0 |
| Y³⁺+La³⁺+Gd³⁺+Yb³⁺ | 2.68 | 2.68 | 2.68 | 2.68 | 0.68 | 2.68 | 2.7 | 3.68 | 2.7 | 2.68 |
| B³⁺ | 0 | 0 | 0 | 0 | 0 | 0 | 0 | 0 | 0 | 0 |
| Zn²⁺ | 0 | 0 | 0 | 0 | 0 | 0 | 0 | 0 | 0 | 0 |
| In³⁺ | 0 | 0 | 0 | 0 | 0 | 0 | 0 | 0 | 0 | 0 |
| Total of Cation ingredients | 100 | 100 | 100 | 100 | 100 | 100 | 100 | 100 | 100 | 100 |

| Anion ingredients (anionic%) | | | | | | | | | | |
|---|---|---|---|---|---|---|---|---|---|---|
| F⁻ | 82.00 | 82.00 | 82.06 | 82.50 | 82.50 | 82.50 | 89.61 | 90.62 | 90.82 | 91.12 |
| O²⁻ | 17.80 | 17.80 | 17.76 | 17.32 | 17.32 | 17.32 | 10.22 | 9.21 | 9.01 | 8.70 |
| Cl⁻ | 0.20 | 0.20 | 0.18 | 0.18 | 0.18 | 0.18 | 0.17 | 0.17 | 0.17 | 0.18 |
| Total of anion ingredients | 100 | 100 | 100 | 100 | 100 | 100 | 100 | 100 | 100 | 100 |
| F-/(F⁻+O²⁻) | 0.821643 | 0.821643 | 0.82208 | 0.826488 | 0.826488 | 0.826488 | 0.897626 | 0.907743 | 0.909747 | 0.912843 |
| Molar ratio O²⁻/P⁵⁺ | 3.59 | 3.59 | 3.50 | 3.50 | 3.50 | 3.50 | 3.50 | 3.50 | 3.50 | 3.50 |
| Refractive index nd | 1.45869 | 1.45936 | 1.45832 | 1.45729 | 1.45305 | 1.45762 | 1.43915 | 1.43821 | 1.43696 | 1.43761 |
| nd ⁽¹⁾ | 1.45869 | 1.45936 | 1.45832 | 1.45729 | 1.45305 | 1.45762 | 1.43915 | 1.43821 | 1.43696 | 1.43761 |
| nd ⁽²⁾ | 1.45989 | 1.46026 | 1.45945 | 1.45834 | 1.45395 | 1.4586 | 1.44007 | 1.43924 | 1.4381 | 1.43886 |
| nd ⁽²⁾ - nd ⁽¹⁾ | 0.0012 | 0.0009 | 0.00113 | 0.00105 | 0.0009 | 0.00098 | 0.00092 | 0.00103 | 0.00114 | 0.00125 |
| \|nd ⁽²⁾ - nd ⁽¹⁾\| | 0.0012 | 0.0009 | 0.00113 | 0.00105 | 0.0009 | 0.00098 | 0.00092 | 0.00103 | 0.00114 | 0.00125 |
| Abbe number vd | 90.1 | 90.6 | 90.4 | 90.4 | 91.2 | 90.4 | 94.9 | 95.5 | 95.2 | 94.9 |
| Glass transition temperature (°C) | 424 | | | | | 422 | | 410 | | 395 |
| Liquidus temperature (°C) | 620 | 620 | 610 | 620 | 650 | 600 | 650 | 650 | 670 | 650 |
| Number of metal foreign substances (pieces/cm³) | 1 | 1 | 3 | 2 | 1 | 1 | 1 | 1 | 1 | 1 |

**Table 1-3**

| | 21 | 22 | 23 | 24 | 25 | 26 | 27 | 28 | 29 | 30 |
|---|---|---|---|---|---|---|---|---|---|---|
| Cation ingredients (cationic%) | | | | | | | | | | |
| P⁵⁺ | 5.42 | 5.42 | 5.42 | 5.42 | 5.42 | 5.52 | 5.42 | 5.42 | 5.42 | 5.17 |
| Al³⁺ | 33.70 | 33.69 | 33.70 | 33.20 | 33.20 | 33.90 | 33.70 | 33.70 | 33.70 | 35.09 |
| Mg²⁺ | 6.83 | 6.83 | 6.83 | 7.83 | 6.83 | 5.93 | 6.83 | 5.83 | 6.83 | 4.07 |
| Ca²⁺ | 28.72 | 30.52 | 28.72 | 28.22 | 29.22 | 27.92 | 28.72 | 27.72 | 28.72 | 27.26 |
| Sr²⁺ | 17.16 | 17.16 | 17.16 | 17.16 | 17.16 | 17.36 | 17.16 | 18.16 | 16.16 | 15.09 |
| Ba²⁺ | 4.70 | 2.91 | 4.70 | 4.70 | 4.70 | 5.90 | 4.70 | 5.70 | 4.70 | 4.52 |
| Mg²⁺+Ca²⁺+Sr²⁺+Ba²⁺ | 57.41 | 57.42 | 57.41 | 57.91 | 57.91 | 57.11 | 57.41 | 57.41 | 56.41 | 50.94 |
| Lⁱ⁺ | 1.00 | 1.00 | 1.00 | 1.00 | 1.00 | 1.00 | 1.00 | 1.00 | 1.00 | 6.12 |
| Na⁺ | 1.20 | 1.20 | 1.20 | 1.20 | 1.20 | 1.20 | 1.20 | 1.20 | 1.20 | 0.00 |
| K⁺ | 0.00 | 0.00 | 0.00 | 0.00 | 0.00 | 0.00 | 0.00 | 0.00 | 0.00 | 0.00 |
| Y³⁺ | 1.27 | 1.27 | 1.27 | 1.27 | 1.27 | 1.27 | 1.27 | 1.27 | 1.27 | 2.68 |
| La³⁺ | 0 | 0 | 0 | 0 | 0 | 0 | 0 | 0 | 0 | 0 |
| Gd³⁺ | 0 | 0 | 0 | 0 | 0 | 0 | 0 | 0 | 0 | 0 |
| Yb³⁺ | 0 | 0 | 0 | 0 | 0 | 0 | 0 | 0 | 0 | 0 |
| Y³⁺+La³⁺+Cd³⁺+Yb³⁺ | 1.27 | 1.27 | 1.27 | 1.27 | 1.27 | 1.27 | 1.27 | 1.27 | 1.27 | 2.68 |
| B³⁺ | 0 | 0 | 0 | 0 | 0 | 0 | 0 | 0 | 0.00 | 0 |
| Zn²⁺ | 0 | 0 | 0 | 0 | 0 | 0 | 0 | 0 | 1.00 | 0 |
| In³⁺ | 0 | 0 | 0 | 0 | 0 | 0 | 0 | 0 | 0.00 | 0 |
| Total of Cation ingredients | 100 | 100 | 100 | 100 | 100 | 100 | 100 | 100 | 100 | 100 |

| Anion ingredients (anionic%) | | | | | | | | | | |
|---|---|---|---|---|---|---|---|---|---|---|
| F⁻ | 91.57 | 91.59 | 91.59 | 91.66 | 91.66 | 91.72 | 91.76 | 91.76 | 91.76 | 91.92 |
| O²⁻ | 8.43 | 8.24 | 8.24 | 8.17 | 8.17 | 8.28 | 8.24 | 8.24 | 8.24 | 7.91 |
| Cl⁻ | 0.00 | 0.17 | 0.17 | 0.17 | 0.17 | 0.00 | 0.00 | 0.00 | 0.00 | 0.17 |
| Total of anion ingredients | 100 | 100 | 100 | 100 | 100 | 100 | 100 | 100 | 100 | 100 |
| F⁻/(F⁻+O²⁻) | 0.9157 | 0.91746 | 0.91746 | 0.918161 | 0.918161 | 0.9172 | 0.9176 | 0.9176 | 0.9176 | 0.920765 |
| Molar ratio O²⁻/P⁵⁺ | 3.57 | 3.50 | 3.50 | 3.50 | 3.50 | 3.50 | 3.50 | 3.50 | 3.50 | 3.50 |
| Refractive index nd | L43284 | 1.43062 | 1.43295 | 1.43128 | 1.43256 | 1.43252 | 1.43229 | 1.4345 | 1.43224 | 1.43165 |
| nd ⁽¹⁾ | 1.43284 | 1.43062 | 1.43295 | 1.43128 | 1.43256 | 1.43252 | 1.43229 | 1.4345 | 1.43224 | 1.43165 |
| nd ⁽²⁾ | 1.4338 | 1.43193 | 1.43435 | 1.43238 | 1.43355 | 1.4335 | 1.43328 | 1.43553 | 1.43304 | 1.43279 |
| nd ⁽²⁾ - nd ⁽¹⁾ | 0.00096 | 0.00131 | 0.0014 | 0.0011 | 0.00099 | 0.00098 | 0.00099 | 0.00103 | 0.0008 | 0.00114 |
| \|nd ⁽²⁾ - nd ⁽¹⁾\| | 0.00096 | 0.00131 | 0.0014 | 0.0011 | 0.00099 | 0.00098 | 0.00099 | 0.00103 | 0.0008 | 0.00114 |
| Abbe number vd | 93.2 | 95.9 | 96 | 96.3 | 95.9 | 95.9 | 96.9 | 95.9 | 96.1 | 95.7 |
| Glass transition temperature (°C) | | | 415 | | | 417 | 418 | 419 | | |
| Liquidus temperature (°C) | 650 | 650 | 650 | 650 | 650 | 650 | 650 | 650 | 650 | 650 |
| Number of metal foreign substances (pieces/cm³) | 1 or less | 1 | 1 | 1 | 1 | 1 | 2 | 1 | 1 | 1 |

**Table 1-4**

| | 31 | 32 | 33 | 34 | 35 | 36 | 37 | 38 | 39 | 40 |
|---|---|---|---|---|---|---|---|---|---|---|
| Cation ingredients (cationic%) | | | | | | | | | | |
| P⁵⁺ | 5.17 | 5.17 | 5.17 | 4.67 | 11.67 | 11.17 | 11.17 | 11.17 | 11.44 | 11.17 |
| Al³⁺ | 35.09 | 36.09 | 35.09 | 35.59 | 31.59 | 32.08 | 32.09 | 32.09 | 31.82 | 32.09 |
| Mg²⁺ | 4.07 | 4.07 | 4.07 | 4.07 | 4.07 | 4.07 | 4.07 | 4.07 | 4.20 | 4.07 |
| Ca²⁺ | 25.38 | 25.38 | 25.38 | 23.26 | 23.26 | 25.00 | 23.26 | 23.26 | 23.13 | 23.26 |
| Sr²⁺ | 15.09 | 15.09 | 15.09 | 15.09 | 15.09 | 16.09 | 15.09 | 15.09 | 15.09 | 15.09 |
| Ba²⁺ | 9.52 | 8.52 | 8.52 | 8.52 | 8.52 | 5.79 | 8.52 | 8.52 | 8.52 | 8.52 |
| Mg²⁺+Ca²⁺+Sr²⁺+Ba²⁺ | 54.06 | 53.06 | 53.06 | 50.94 | 50.94 | 50.95 | 50.94 | 50.94 | 50.94 | 50.94 |
| Lⁱ⁺ | 3.00 | 3.00 | 3.00 | 6.12 | 3.12 | 3.12 | 3.12 | 3.12 | 3.12 | 3.12 |
| Na⁺ | 0.00 | 0.00 | 0.00 | 0.00 | 0.00 | 0.00 | 0.00 | 0.00 | 0.00 | 0.00 |
| K⁺ | 0.00 | 0.00 | 0.00 | 0.00 | 0.00 | 0.00 | 0.00 | 0.00 | 0.00 | 0.00 |
| Y³⁺ | 2.68 | 2.68 | 3.68 | 2.68 | 2.68 | 2.68 | 2.68 | 2.68 | 2.68 | 2.68 |
| La³⁺ | 0 | 0 | 0 | 0 | 0 | 0 | 0 | 0 | 0 | 0 |
| Gd³⁺ | 0 | 0 | 0 | 0 | 0 | 0 | 0 | 0 | 0 | 0 |
| Yb³⁺ | 0 | 0 | 0 | 0 | 0 | 0 | 0 | 0 | 0 | 0 |
| Y³⁺+La³⁺+Gd³⁺Yb³⁺ | 2.68 | 2.68 | 3.68 | 2.68 | 2.68 | 2.68 | 2.68 | 2.68 | 2.68 | 2.68 |
| B³⁺ | 0 | 0 | 0 | 0 | 0 | 0 | 0 | 0 | 0 | 0 |
| Zn²⁺ | 0 | 0 | 0 | 0 | 0 | 0 | 0 | 0 | 0 | 0 |
| In³⁺ | 0 | 0 | 0 | 0 | 0 | 0 | 0 | 0 | 0 | 0 |
| Total of Cation ingredients | 100 | 100 | 100 | 100 | 100 | 100 | 100 | 100 | 100 | 100 |

| Anion ingredients (anionic%) | | | | | | | | | | |
|---|---|---|---|---|---|---|---|---|---|---|
| F⁻ | 92.03 | 92.06 | 92.06 | 92.71 | 81.67 | 82.00 | 82.00 | 82.00 | 82.06 | 82.50 |
| O²⁻ | 7.80 | 7.77 | 7.77 | 7.12 | 18.15 | 17.82 | 17.82 | 17.82 | 17.76 | 17.32 |
| Cl⁻ | 0.17 | 0.17 | 0.17 | 0.17 | 0.18 | 0.18 | 0.18 | 0.18 | 0.18 | 0.18 |
| Total of anion ingredients | 100 | 100 | 100 | 100 | 100 | 100 | 100 | 100 | 100 | 100 |
| F⁻/(F⁻+O²⁻) | 0.921867 | 0.922168 | 0.922168 | 0.928679 | 0.818173 | 0.821479 | 0.821479 | 0.821479 | 0.82208 | 0.826488 |
| Molar ratio O²⁻/P⁵⁺ | 3.50 | 3.50 | 3.50 | 3.50 | 3.50 | 3.59 | 3.59 | 3.59 | 3.50 | 3.50 |
| Refractive index nd | 1.43795 | 1.43644 | 1.43811 | 1.43382 | 1.45886 | 1.45599 | 1.45869 | 1.45936 | 1.45832 | 1.45729 |
| nd ⁽¹⁾ | 1.43795 | 1.43644 | 1.43811 | 1.43382 | 1.45886 | 1.45599 | 1.45869 | 1.45936 | 1.45832 | 1.45729 |
| nd ⁽²⁾ | 1.43903 | 1.43769 | 1.43929 | 1.43489 | 1.45989 | 1.45693 | 1.45951 | 1.46016 | 1.45931 | 1.45843 |
| nd ⁽²⁾ - nd | 0.00108 | 0.00125 | 0.00118 | 0.00107 | 0.00103 | 0.00094 | 0.00082 | 0.0008 | 0.00099 | 0.00114 |
| \|nd ⁽²⁾ - nd ⁽¹⁾\| | 0.00108 | 0.00125 | 0.00118 | 0.00107 | 0.00103 | 0.00094 | 0.00082 | 0.0008 | 0.00099 | 0.00114 |
| Abbe number vd | 95.4 | 95.7 | 95.7 | 95.8 | 90 | 90.5 | 90.1 | 90.6 | 90.4 | 90.4 |
| Glass transition temperature (°C) | 407 | 410 | 409 | 390 | | | 424 | | | |
| Liquidus temperature (°C) | 650 | 650 | 650 | 670 | 620 | 610 | 620 | 620 | 610 | 620 |
| Number of metal foreign substances (pieces/cm³) | 1 | 1 | 1 | 1 | 2 | 1 | 1 or less | 1 | 1 | 1 |

**Table 1-5**

| | 41 | 42 | 43 | 44 | 45 | 46 | 47 | 48 | 49 | 50 |
|---|---|---|---|---|---|---|---|---|---|---|
| Cation ingredients (cationic%) | | | | | | | | | | |
| P⁵⁺ | 11.17 | 11.17 | 6.80 | 6.17 | 6.00 | 5.42 | 5.42 | 5.42 | 5.42 | 5.42 |
| Al³⁺ | 34.09 | 32.09 | 35.80 | 36.09 | 35.80 | 33.70 | 33.69 | 33.70 | 33.20 | 33.20 |
| Mg²⁺ | 4.07 | 4.07 | 4.30 | 3.07 | 4.30 | 6.83 | 6.83 | 6.83 | 7.83 | 6.83 |
| Ca²⁺ | 23.26 | 23.26 | 23.70 | 25.38 | 24.50 | 28.72 | 30.52 | 28.72 | 28.22 | 29.22 |
| Sr²⁺ | 15.09 | 15.09 | 18.40 | 15.09 | 18.40 | 17.16 | 17.16 | 17.16 | 17.16 | 17.16 |
| Ba²⁺ | 8.52 | 8.52 | 6.00 | 8.52 | 6.00 | 4.70 | 2.91 | 4.70 | 4.70 | 4.70 |
| Mg²⁺+Ca²⁺+Sr²⁺+Ba²⁺ | 50.94 | 50.94 | 52.4 | 52.06 | 53.2 | 57.41 | 57.42 | 57.41 | 57.91 | 57.91 |
| Lⁱ⁺ | 3.12 | 3.12 | 2.30 | 2.00 | 2.30 | 1.00 | 1.00 | 1.00 | 1.00 | 1.00 |
| Na⁺ | 0.00 | 0.00 | 0.00 | 0.00 | 0.00 | 1.20 | 1.20 | 1.20 | 1.20 | 1.20 |
| K⁺ | 0.00 | 0.00 | 0.00 | 0.00 | 0.00 | 0.00 | 0.00 | 0.00 | 0.00 | 0.00 |
| Y³⁺ | 0.68 | 2.68 | 2.70 | 3.68 | 2.70 | 1.27 | 1.27 | 1.27 | 1.27 | 1.27 |
| La³⁺ | 0 | 0 | 0 | 0 | 0 | 0 | 0 | 0 | 0 | 0 |
| Gd³⁺ | 0 | 0 | 0 | 0 | 0 | 0 | 0 | 0 | 0 | 0 |
| Yb³⁺ | 0 | 0 | 0 | 0 | 0 | 0 | 0 | 0 | 0 | 0 |
| Y³⁺+La³⁺+Gd³⁺+Yb³⁺ B³⁺ | 0.68 | 2.68 | 2.7 | 3.68 | 2.7 | 1.27 | 1.27 | 1.27 | 1.27 | 1.27 |
| | 0 | 0 | 0 | 0 | 0 | 0 | 0 | 0 | 0 | 0 |
| Zn²⁺ | 0 | 0 | 0 | 0 | 0 | 0 | 0 | 0 | 0 | 0 |
| In³⁺ | 0 | 0 | 0 | 0 | 0 | 0 | 0 | 0 | 0 | 0 |
| Total of Cation Total ingredients | 100 | 100 | 100 | 100 | 100 | 100 | 100 | 100 | 100 | 100 |

| Anion ingredients (anionic%) | | | | | | | | | | |
|---|---|---|---|---|---|---|---|---|---|---|
| F⁻ | 82.50 | 82.50 | 89.61 | 90.62 | 90.82 | 91.57 | 91.59 | 91.59 | 91.66 | 91.66 |
| O²⁻ | 17.32 | 17.32 | 10.22 | 9.21 | 9.01 | 8.43 | 8.24 | 8.24 | 8.17 | 8.17 |
| Cl⁻ | 0.18 | 0.18 | 0.17 | 0.17 | 0.17 | 0.00 | 0.17 | 0.17 | 0.17 | 0.17 |
| Total of anion ingredients | 100 | 100 | 100 | 100 | 100 | 100 | 100 | 100 | 100 | 100 |
| F⁻/(F+O²⁻) | 0.826488 | 0.826488 | 0.897626 | 0.907743 | 0.909747 | 0.9157 | 0.91746 | 0.91746 | 0.918161 | 0.918161 |
| Molar ratio O²⁻/P⁵⁺ | 3.50 | 3.50 | 3.50 | 3.50 | 3.50 | 3.57 | 3.50 | 3.50 | 3.50 | 3.50 |
| Refractive index nd | 1.45305 | 1.45762 | 1.43915 | 1.43821 | 1.43696 | 1.43284 | 1.43062 | 1.43295 | 1.43128 | 1.43256 |
| nd⁽¹⁾ | 1.45305 | 1.45762 | 1.43915 | 1.43821 | 1.43696 | 1.43284 | 1.43062 | 1.43295 | 1.43128 | 1.43256 |
| nd⁽²⁾ | 1.4544 | 1.45877 | 1.44051 | 1.43926 | 1.43828 | 1.43379 | 1.43175 | 1.43419 | 1.43231 | 1.43363 |
| nd ⁽²⁾ - nd ⁽¹⁾ | 0.00135 | 0.00115 | 0.00136 | 0.00105 | 0.00132 | 0.00095 | 0.00113 | 0.00124 | 0.00103 | 0.00107 |
| \|nd ⁽²⁾ - nd ⁽¹⁾\| | 0.00135 | 0.00115 | 0.00136 | 0.00105 | 0.00132 | 0.00095 | 0.00113 | 0.00124 | 0.00103 | 0.00107 |
| Abbe number vd | 91.2 | 90.4 | 94.9 | 95.5 | 95.2 | 93.2 | 95.9 | 96 | 96.3 | 95.9 |
| Glass transition temperature (°C) | | 422 | | 410 | | 418 | | | | |
| Liquidus temperature (°C) | 650 | 600 | 650 | 650 | 670 | 650 | 650 | 650 | 650 | 650 |
| Number of metal foreign substances (pieces/cm³) | 1 | 3 | 1 | 1 | 1 | 1 or less | 1 | 1 | 1 | 2 |

**Table 1-6**

| | 51 | 52 | 53 | 54 | 55 | 56 | 57 | 58 | 59 |
|---|---|---|---|---|---|---|---|---|---|
| Cation ingredients (cationic%) | | | | | | | | | |
| P⁵⁺ | 5.42 | 5.42 | 5.42 | 5.42 | 5.17 | 5.17 | 5.17 | 5.17 | 4.67 |
| Al³⁺ | 33.70 | 33.70 | 33.70 | 33.70 | 35.09 | 35.09 | 36.09 | 35.09 | 35.59 |
| Mg²⁺ | 5.83 | 6.83 | 5.83 | 6.83 | 4.07 | 4.07 | 4.07 | 4.07 | 4.07 |
| Ca²⁺ | 27.72 | 28.72 | 27.72 | 28.72 | 27.26 | 25.38 | 25.38 | 25.38 | 23.26 |
| Sr²⁺ | 17.16 | 17.16 | 18.16 | 16.16 | 15.09 | 15.09 | 15.09 | 15.09 | 15.09 |
| Ba²⁺ | 5.70 | 4.70 | 5.70 | 4.70 | 4.52 | 9.52 | 8.52 | 8.52 | 8.52 |
| Mg²⁺+Ca²⁺+Sr²⁺+Ba²⁺ | 56.41 | 57.41 | 57.41 | 56.41 | 50.94 | 54.06 | 53.06 | 53.06 | 50.94 |
| Lⁱ⁺ | 1.00 | 1.00 | 1.00 | 1.00 | 6.12 | 3.00 | 3.00 | 3.00 | 6.12 |
| Na⁺ | 1.20 | 1.20 | 1.20 | 1.20 | 0.00 | 0.00 | 0.00 | 0.00 | 0.00 |
| K⁺ | 1.00 | 0.00 | 0.00 | 0.00 | 0.00 | 0.00 | 0.00 | 0.00 | 0.00 |
| Y³⁺ | 1.27 | 1.27 | 1.27 | 1.27 | 2.68 | 2.68 | 2.68 | 3.68 | 2.68 |
| La³⁺ | 0 | 0 | 0 | 0 | 0 | 0 | 0 | 0 | 0 |
| Gd³⁺ | 0 | 0 | 0 | 0 | 0 | 0 | 0 | 0 | 0 |
| Yb³⁺ | 0 | 0 | 0 | 0 | 0 | 0 | 0 | 0 | 0 |
| Y³⁺+La³⁺+Gd³⁺+Yb³⁺ | 1.27 | 1.27 | 1.27 | 1.27 | 2.68 | 2.68 | 2.68 | 3.68 | 2.68 |
| B³⁺ | 0 | 0 | 0 | 0.00 | 0 | 0 | 0 | 0 | 0 |
| Zn²⁺ | 0 | 0 | 0 | 1.00 | 0 | 0 | 0 | 0 | 0 |
| In³⁺ | 0 | 0 | 0 | 0.00 | 0 | 0 | 0 | 0 | 0 |
| Total of Cation ingredients | 100 | 100 | 100 | 100 | 100 | 100 | 100 | 100 | 100 |

| Anion ingredients (anionic%) | | | | | | | | | |
|---|---|---|---|---|---|---|---|---|---|
| F⁻ | 91.72 | 91.76 | 91.76 | 91.76 | 91.92 | 92.03 | 92.06 | 92.06 | 92.71 |
| O²⁻ | 8.28 | 8.24 | 8.24 | 8.24 | 7.91 | 7.80 | 7.77 | 7.77 | 7.12 |
| Cl⁻ | 0.00 | 0.00 | 0.00 | 0.00 | 0.17 | 0.17 | 0.17 | 0.17 | 0.17 |
| Total of anion ingredients | 100 | 100 | 100 | 100 | 100 | 100 | 100 | 100 | 100 |
| F⁻/(F⁻+O²⁻) | 0.9172 | 0.9176 | 0.9176 | 0.9176 | 0.920765 | 0.921867 | 0.922168 | 0.922168 | 0.928679 |
| Molar ratio O²⁻/P⁵⁺ | 3.50 | 3.50 | 3.50 | 3.50 | 3.50 | 3.50 | 3.50 | 3.50 | 3.50 |
| Refractive index nd | 1.43252 | 1.43229 | 1.4345 | 1.43224 | 1.43165 | 1.43795 | 1.43644 | 1.43811 | 1.43382 |
| nd ⁽¹⁾ | 1.43252 | 1.43229 | 1.4345 | 1.43224 | 1.43165 | 1.43795 | 1.43644 | 1.43811 | 1.43382 |
| nd ⁽²⁾ | 1.43362 | 1.43361 | 1.43574 | 1.43357 | 1.43275 | 1.43908 | 1.43774 | 1.43928 | 1.43502 |
| nd ⁽²⁾ - nd ⁽¹⁾ | 0.0011 | 0.00132 | 0.00124 | 0.00133 | 0.0011 | 0.00113 | 0.0013 | 0.00117 | 0.0012 |
| \|nd ⁽²⁾ - nd ⁽¹⁾\| | 0.0011 | 0.00132 | 0.00124 | 0.00133 | 0.0011 | 0.00113 | 0.0013 | 0.00117 | 0.0012 |
| Abbe number vd | 95.9 | 96.9 | 95.9 | 96.1 | 95.7 | 95.4 | 95.7 | 95.7 | 95.8 |
| Glass transition temperature (°C) | 417 | 418 | 419 | | | 407 | 410 | 409 | 390 |
| Liquidus temperature (°C) | 650 | 650 | 650 | 650 | 650 | 650 | 650 | 650 | 670 |
| Number of metal foreign substances (pieces/cm³) | 1 | 1 | 1 or less | 1 | 1 | 1 | 1 or less | 1 | 1 |

Incidentally, 0.5 to 13 cationic% of Cu²⁺ may be added to the fluorophosphate glasses 1 to 59 based on the total content of the glass ingredients excluding Cu²⁺ to prepare near-infrared absorptive glasses, and it was confirmed that no striae or metal foreign substance is present in the near-infrared absorptive glasses.

In addition, as shown in Fig. 1, five kinds of fluorophosphate glasses whose molar ratios (O²⁻/P⁵⁺) are respectively 3.4, 3.3, 3.2, 3.1 and 3.0 were prepared, and nd⁽¹⁾, nd⁽²⁾ and the number density of metal particles having a particle diameter equal to or more than 10 µm in the glasses were measured. As a result of the measurement, for each of the glasses, an absolute value of (nd⁽²⁾-nd⁽¹⁾) exceeded 0.00300, and the number density of metal particles was increased. In addition, it was confirmed that striae is present in each of the glasses.

### Example 2 (example of manufacture of press molding preform)

A lump of molten glass was separated using a method of flowing molten glass from which the fluorophosphate glasses 1 to 59 are obtained out of a pipe made of platinum alloy and adjusted to a temperature range to allow stable flowing without glass being devitrified, at a constant flow rate and dropping a lump of glass, or a method of supporting a leading end of stream of the molten glass using a support and suddenly descending the support to separate a lump of glass. The obtained lump of molten glass had a weight which is an addition of a weight of a removed portion, which will be described later, to a weight of one objective preform.

Next, the obtained lump of molten glass was received in a receiving mold having a glass exhaust nozzle formed in its bottom portion, the lump of glass was molded while rising the lump of glass by a gas exhausted from the gas exhaust nozzle, and press molding preforms were prepared. The preforms were made in a spherical shape or a flat spherical shape by adjusting and setting a separate interval of the molten glass. The weight of the obtained preforms was exactly equal to a set value and it was confirmed that all the preforms had a smooth surface and included no striae or metal foreign substance such as platinum.

Next, the lump of molten glass separated by a method of using a lower mold for preform molding whose molding surface is a concave surface and an upper mold for preform molding whose molding surface is a convex surface and using the support on the molding surface of the lower mold for preform molding was supplied, a highpressure gas was supplied to a rear side of the lower mold molding surface which is composed of porous materials, the lump of molten glass rose by a gas exhausted from the molding surface and its viscosity was adjusted, the lump of glass on the lower mold was press molded by the upper mold for preform molding, and a preform having an indent on its top side was molded. Next, the upper mold was separated from the top side, the glass rose again and was cooled, the glass was separated from the lower mold, and a preform whose one surface is a convex surface and whose other surface has an indent was prepared. This preform was used for precision press molding of a convex meniscus lens or a concave meniscus lens which will be described later. Incidentally, the upper and lower mold molding surfaces for the mold for preform molding may also be a convex surface. In this case, it is possible to mold a preform having indents in its two opposing surfaces. This preform is suitable for precision press molding of a double-concave lens. Both of the moldings had no problem that volatile materials from the glass are attached to the preform molding mold or clog the gas exhaust nozzle.

In addition, as a separate method, an optically homogeneous preform was obtained by polishing the entire surface of the molded spherical preform using a known method. It was confirmed that no striae or metal foreign substance such as platinum was present in the obtained preform.

Next, the molten glass composed of the fluorophosphate glasses 1 to 59 was flown out of a pipe made of platinum alloy and adjusted to a temperature range to allow stable flowing without glass being devitrified, at a constant flow rate, and while the molten glass was continuously flown into a mold, a molded glass plate was horizontally drawn out of an opening of a side of the mold at a constant speed, the glass plate was annealed by passing through an annealing furnace to remove distortion and was cut at desired lengths, whereby glass plates were obtained one after another. Refractive indexes of the plurality of glass plates thus obtained were measured, and as a result of the measurement, it was confirmed that tolerances of the refractive indexes nd were within ±0.00020 and variation of refractive indexes of the fluorophosphate glasses was limited to an extremely low level. In addition, the glass whose refractive index was to be measured was slowly cooled at a cooling rate of 30°C per hour, as described above.

In addition, the glass plates were cut into a pip shape to prepare a plurality of glass chips, and an optically homogeneous preform having a smooth surface was obtained by grinding and polishing these glass chips.

### Example 3 (example of manufacture of optical element)

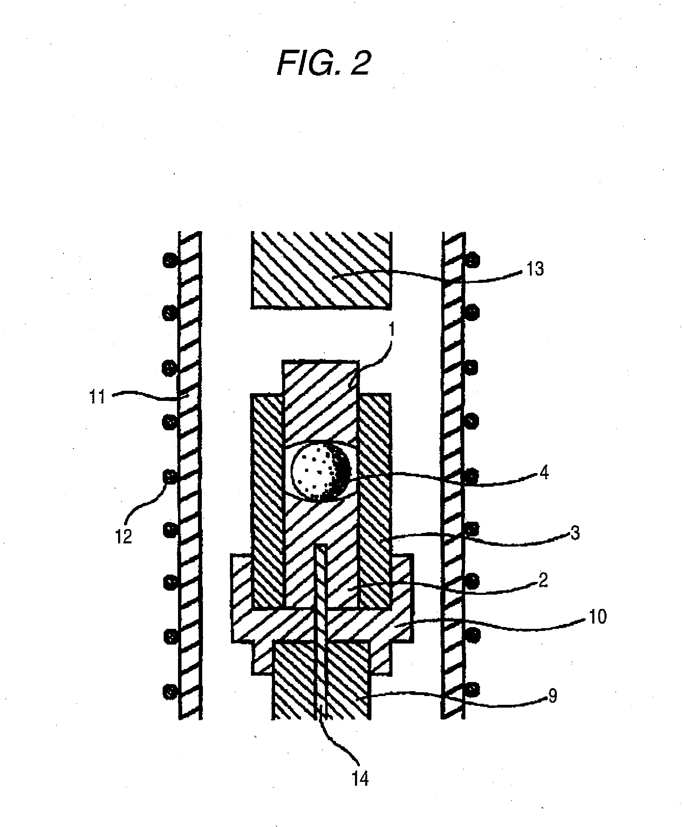

An aspherical lens was obtained by precision press-molding the preform, which was obtained in Example 2 and composed of the fluorophosphate glasses 1 to 59, using a press apparatus shown in Fig. 2.

Specifically, after placing a preform 4 between a lower mold 2 and an upper mold 1 of a press mold including the upper mold 1, the lower mold 2 and a trunk mold 3, a quartz tube 11 was electrically conducted to a heater 12 in a nitrogen atmosphere to heat the quartz tube 11. The internal temperature of the press mold was set to a temperature at which glass to be molded shows viscosity of 10⁸ to 10¹⁰ dPa·s, and while maintaining the same temperature, a pressing rod 13 descended to push down the upper mold 1 to press the preform set in the press mold. Press pressure was set to 8 MPa and press time was set to 30 seconds. After pressing, the press pressure was released, a press-molded glass molded article was slowly cooled to a temperature at which the glass reaches viscosity equal to or more than 10¹² dPa·s, with the lower mold 2 and the upper mold 1 contacting with each other, and was suddenly cooled to the room temperature, and then the glass molded article was detached from the press mold to obtain an aspherical lens. The obtained aspherical lens had extremely high surface precision. Various aspherical lenses such as a convex meniscus lens, a concave meniscus lens, a double-concave lens, a double-convex lens, a plano-convex lens and a plano-concave lens may be made by properly modifying a shape of the molding surface of the press mold.

In addition, in the precision press molding using the preform having an indent prepared in the above example, the indent of the preform was pressed with a vertex of a convex molding surface of the upper mold, and the preform was arranged at a central position within the press mold such that the preform is not deviated from the position.

In Fig. 2, reference numerals 9,10 and 14 denote a support rod, a lower mold/trunk mold holder and a thermocouple, respectively.

An anti-reflecting film was provided on the aspherical lens obtained by the precision press molding, if necessary.

Next, the same preform as the above preforms was precision press-molded by a method separate from the above described methods. In this method, first, while rising the preform, the preform was pre-heated at a temperature at which glass constituting the preform reached viscosity of 10⁸ dPa·s. On the other hand, the press mold having the upper mold, the lower mold and the trunk mold was heated to a temperature at which the glass constituting the preform reached viscosity of 10⁹ to 10¹² dPa·s, the pre-heated preform was introduced into a cavity of the press mold and was precision press-molded at 10 MPa. At the same time of start of press, the glass and the press mold began to be cooled, and after cooling them until the molded glass reaches viscosity equal to or more than 10¹² dPa·s, a molded article was released to obtain an aspherical lens. The obtained aspherical lens had extremely high surface precision. Various aspherical lenses such as a convex meniscus lens, a concave meniscus lens, a double-concave lens, a double-convex lens, a plano-convex lens and a plano-concave lens may be made by properly modifying a shape of the molding surface of the press mold.

An anti-reflecting film may be coated on the aspherical lens which is obtained by precision press-molding, if necessary.

In this manner, an optical element composed of optically-homogeneous glass without any foreign substance or striae could be obtained with high productivity and high precision.

### Example 4 (example of manufacture of optical element blank)

The molten glass from which the fluorophosphate glasses 1 to 59 shown in Tables 1-1 to 1-6 are obtained was flown out of a pipe made of platinum alloy and adjusted to a temperature range to allow stable flowing without glass being devitrified, at a constant flow rate, and the molten glass was supplied on the molding surface of the lower mold constituting the press mold. In addition, before supplying the molten glass, a powder release agent such as boron nitride powder was uniformly applied on the lower mold molding surface.

Next, the flown molten glass was cut using a cutting knife which is called shear to thereby obtain a desired amount of lumps of molten glass on the lower mold molding surface.

Next, the lower mold on which the lump of molten glass was placed was moved to a position at which the upper mold constituting the press mold stands upward, and the lump of molten glass was press-molded using the upper and lower molds under a state where the lump of molten glass was softened. A press molded article thus obtained was released and detached from the press mold to obtain an optical element blank. Next, the obtained blank was annealed to eliminate distortion, and its optical characteristic such as a refractive index was adjusted to be exactly equal to a desired value to obtain an optical element blank having a desired shape. In this manner, a lens blank approximate to a shape of various spherical lenses such as a convex meniscus lens, a concave meniscus lens, a plano-convex lens, a plano-concave lens, a double-convex lens and a double-concave lens was prepared.

Next, the molten glass from which the fluorophosphate glasses 1 to 59 shown in Tables 1-1 to 1-6 are obtained was flown out of a pipe made of platinum alloy adjusted to a temperature range to allow stable flowing without glass being devitrified, at a constant flow rate, and while the molten glass was continuously flown into a mold, a molded glass plate was horizontally drawn out of an opening of a side of the mold at a constant speed, the glass plate was annealed by passing through an annealing furnace to remove distortion and was cut at desired lengths, whereby glass plates were obtained one after another.

In addition, the glass plates were cut into a pip shape to prepare a plurality of glass chips, and a preform having a rough surface was obtained by barrel-polishing these glass chips to remove edges of the glass chips and adjusting weight of the glass chips to a desired value.

In addition, boron nitride powder was uniformly applied on the entire surface of the preform, the preform was placed on a heat resistant dish, and the dish was put in a heating furnace to heat and soften the preform. The softened preform was introduced and press-molded in the press mold to obtain an optical element blank.

The optical element blank thus obtained was annealed to eliminate distortion, and its optical characteristic such as a refractive index was adjusted to be exactly equal to a desired value. In this manner, a lens blank approximate to a shape of various spherical lenses such as a convex meniscus lens, a concave meniscus lens, a plano-convex lens, a plano-concave lens, a double-convex lens and a double-concave lens was prepared.

### Example 5 (example of manufacture of optical element)

Various spherical lenses such as a convex meniscus lens, a concave meniscus lens, a plano-convex lens, a plano-concave lens, a double-convex lens and a double-concave lens ware prepared by grinding and polishing the optical element blank obtained in Example 4.

In addition, various spherical lenses and prisms such as a convex meniscus lens, a concave meniscus lens, a plano-convex lens, a plano-concave lens, a double-convex lens and a double-concave lens ware prepared by cutting, grinding and polishing the annealed glass plate prepared in Example 4.

In this manner, a glass optical element having high internal quality and having no foreign substance or striae could be obtained with high productivity and high precision.

An anti-reflecting film may be coated on the obtained optical element, if necessary.

### Example 6 (example of manufacture of optical element)

The molten glass from which the fluorophosphate glasses 1 to 59 shown in Tables 1-1 to 1-6 are obtained was flown out of a pipe made of platinum alloy and adjusted to a temperature range to allow stable flowing without glass being devitrified, at a constant flow rate, and while the molten glass was continuously flown into a mold, a molded glass plate was horizontally drawn out of an opening of a side of the mold at a constant speed, the glass plate was annealed by passing through an annealing furnace to remove distortion and was cut at desired lengths, whereby glass plates were obtained one after another.

Next, the glass plates were cut into a pip shape to prepare glass chips, the glass chips are heated and softened, the softened glass chips were introduced between three rollers rotating around axes in parallel to each other, and while rotating the rollers and narrowing a gap between the rollers, the glass chips were pressed to be molded into rod-shaped glass.

The obtained rod-shaped glass was annealed and sliced to be divided into cylindrical glasses, these cylindrical glasses were barrel-polished, boron nitride powder was uniformly applied on the entire surface of the cylindrical glasses, the cylindrical glasses were placed on a heat resistant dish, and the dish was put in a heating furnace to heat and soften the cylindrical glasses. The softened glasses were introduced and press-molded in the press mold to obtain an optical element blank.

The optical element blank thus obtained was annealed to eliminate distortion, and its optical characteristic such as a refractive index was adjusted to be exactly equal to a desired value. In this manner, a lens blank approximate to a shape of various spherical lenses such as a convex meniscus lens, a concave meniscus lens, a plano-convex lens, a plano-concave lens, a double-convex lens and a double-concave lens was prepared.

Next, various spherical lenses such as a convex meniscus lens, a concave meniscus lens, a plano-convex lens, a plano-concave lens, a double-convex lens and a double-concave lens ware prepared by grinding and polishing the lens blanks.

In this manner, a glass optical element having high internal quality and having no foreign substance or stirae could be obtained with high productivity and high precision.

An anti-reflecting film may be coated on the obtained optical element, if necessary.

### Example 7 (example of manufacture of optical element)

The rod-shaped glass obtained in Example 6 was annealed to eliminate distortion, its optical characteristic such as a refractive index was adjusted to be exactly equal to a desired value, and then the glass was sliced into cylindrical glasses. Next, various spherical lenses such as a convex meniscus lens, a concave meniscus lens, a plano-convex lens, a plano-concave lens, a double-convex lens and a double-concave lens ware prepared by grinding and polishing these cylindrical glasses.

In this manner, a glass optical element having high internal quality and having no foreign substance or stirae could be obtained with high productivity and high precision.

An anti-reflecting film may be coated on the obtained optical element, if necessary.

### Example 8 (example of manufacture of optical element)

Next, the molten glass from which the fluorophosphate glasses 1 to 59 shown in Tables 1-1 to 1-6 are obtained was flown out of a pipe made of platinum alloy and adjusted to a temperature range to allow stable flowing without glass being devitrified, at a constant flow rate, and while the molten glass was continuously flown into a mold, a molded glass plate was horizontally drawn out of an opening of a side of the mold at a constant speed, the glass plate was annealed by passing through an annealing furnace to remove distortion, its optical characteristic such as a refractive index was adjusted to be exactly equal to a desired value, and various spherical lenses and prisms such as a convex meniscus lens, a concave meniscus lens, a plano-convex lens, a plano-concave lens, a double-convex lens and a double-concave lens ware prepared by grinding and polishing glass chips obtained by cutting the glass plate into a pip shape.

In this manner, a glass optical element having high internal quality and having no foreign substance or striae could be obtained with high productivity and high precision.

An anti-reflecting film may be coated on the obtained optical element, if necessary.

According to the present invention, when optical glass composed of fluorophosphate glass is prepared, or molten glass obtained is flown out of a pipe and is molded in a glass mold, it is possible to obtain optical glass with low dispersibility, which is capable of preventing volatility of glass ingredients and suppressing quality deviation due to variation of glass composition, and to manufacture a press molding preform and further optical elements such as various kinds of lenses using the optical glass.

While the present invention has been described in detail and with reference to specific embodiments thereof, it will be apparent to one skilled in the art that various changes and modifications can be made therein without departing from the scope thereof.

This application is based on Japanese patent application No. 2008-086041 filed March 28, 2008 and Japanese patent application No. 2008-228270 filed September 5, 2008, the entire contents thereof being hereby incorporated by reference.

## Claims

1. A fluorophosphate glass comprising phosphorus, oxygen and fluorine as glass ingredients, wherein, provided that a refractive index nd of the glass is nd⁽¹⁾ and a refractive index nd after re-melting the glass at 900°C for 1 hour in a nitrogen atmosphere, cooling the glass to a glass transition temperature and then cooling the glass down to 25°C at a temperature decrease rate of 30°C per hour is nd⁽²⁾, an absolute value of a difference between nd⁽¹⁾ and nd⁽²⁾ (nd⁽²⁾-nd⁽¹⁾) is equal to or less than 0.00300, and a molar ratio (O²⁻/P⁵⁺) of a content of O²⁻ to a content of P⁵⁺ is equal to or more than 3.5.

2. The fluorophosphate glass according to Claim 1, which has an Abbe number vd of more than 70. ,

3. The fluorophosphate glass according to Claim 1 or 2, which comprises, in terms of cationic%:
P⁵⁺_{:} 3 to 50%,
Al³⁺: 5 to 40%,
Mg²⁺: 0 to 10%,
Ca²⁺: 0 to 30%,
Sr²⁺: 0 to 30%,
Ba²⁺: 0 to 40%,
(wherein the total content of Mg²⁺, Ca²⁺, Sr²⁺ and Ba²⁺ is 10% or more,)
Li⁺: 0 to 30%,
Na⁺: 0 to 20%,
K⁺: 0 to 20%,
Y³⁺: 0 to 10%,
La³⁺: 0 to 10%,
Gd³⁺: 0 to 10%,
Yb³⁺: 0 to 10%,
B³⁺: 0 to 10%,
Zn²⁺: 0 to 20%, and
In³⁺: 0 to 20%; and,
in terms of anionic%:
F⁻: 20 to 95%, and
O²⁻: 5 to 80%.

4. The fluorophosphate glass according to Claim 1 or 2, wherein the content of F⁻ is 65 anionic% or more.

5. The fluorophosphate glass according to Claim 4, which comprises, in , terms of cationic%:
P⁵⁺: 3 to 15%,
Al³⁺: 25 to 40%,
Ca²⁺: 5 to 35%, and
Sr²⁺: 5 to 25%.

6. The fluorophosphate glass according to Claim 5, which comprises, in terms of cationic%:
Mg²⁺: 0 to 10%,
Ba²⁺: 0 to 20%,
Li⁺: 0 to 20%,
Na⁺: 0 to 10%,
K⁺: 0 to 10%, and
Y³⁺: 0 to 5%.

7. The fluorophosphate glass according to any one of Claims 1 to 6, wherein a number density of foreign substances contained in the glass and having a particle diameter equal to or more than 10 µm is less than 5 pieces/cm³.

8. A glass material for press molding, comprising the fluorophosphate glass according to any one of Claims 1 to 7.

9. An optical element blank comprising the fluorophosphate glass according to any one of Claims 1 to 7.

10. An optical element comprising the fluorophosphate glass according to any one of Claims 1 to 7.
